# FASCICULE DE BREVET EUROPEEN

(11) **EP 3 551 416 B1**
(45) Date de publication et mention de la délivrance du brevet: **14.10.2020**
(21) Numéro de dépôt: 17822378.0
(22) Date de dépôt: 07.12.2017
(51) Int. Cl.: B29C 45/06, B29K 105/00

(54) **MACHINE ET PROCEDE DE MOULAGE DE PREFORMES PAR INJECTION COMPRESSION**
MASCHINE UND VERFAHREN ZUR FORMUNG VON VORFORMEN DURCH SPRITZPRÄGEN
MACHINE AND METHOD FOR MOULDING PREFORMS BY INJECTION-COMPRESSION

(30) Priorité: 12.12.2016 FR 1662325
(43) Date de publication de la demande: 16.10.2019
(73) Titulaire: Sidel Participations, 76930 Octeville-sur-Mer (FR)
(72) Inventeur: DUCLOS, Yves-Alban, 76930 Octeville-sur-mer (FR); NORTURE, Michel, 76930 Octeville-sur-mer (FR); HELIX, Gilles, 76930 Octeville-sur-mer (FR); LAMARE, Olivier, 76930 Octeville-sur-mer (FR); GROSSIN, Emilie, 76930 Octeville-sur-mer (FR)
(74) Mandataire: Sidel Group
(86) Numéro de dépôt international: PCT/FR2017/053430
(87) Numéro de publication internationale: WO 2018/109327

(56) Documents cités:
- EP-A2- 0 425 388
- EP-A2- 0 497 700
- EP-B1- 2 022 618
- FR-A1- 3 018 048

## Description

L'invention a trait au domaine du moulage de préformes en matière plastique destinées à la fabrication de récipients (notamment de bouteilles) par soufflage ou étirage soufflage.

Une telle préforme comprend généralement un corps de forme cylindrique, et un col dans le prolongement du corps à une extrémité supérieure de celui-ci. A une extrémité inférieure opposée, le corps est fermé par un fond en forme de dôme.

Une préforme de ce type est classiquement obtenue par injection d'une matière plastique (telle que le PET) dans un moule à l'empreinte de la préforme. Ordinairement, chaque moule comprend un corps de moule à l'empreinte d'une face externe du corps de la préforme, et un noyau oblong à l'empreinte d'une face interne du corps de la préforme.

Pour former la préforme, la matière est injectée entre le corps de moule et le noyau, lequel est ensuite retiré pour permettre l'éjection de la préforme. On trouvera un exemple de moule pour préforme dans la demande de brevet européen EP 1 998 945 (SA des eaux minérales d'Evian) ou son équivalent américain US 8 691 140.

La matière plastique, initialement déversée sous forme de granulés solides dans une trémie, est délivrée sous forme de pâte chaude par une vis d'injection à une machine de moulage équipée d'une pluralité de tels moules, dans lesquels la matière plastique pâteuse est injectée.

La demande de brevet européen EP 2 585 273 (SIPA) décrit une telle machine de moulage, équipée d'une pluralité d'unités individuelles montées sur un carrousel et chacune destinée à assurer le moulage d'une préforme. Il est indiqué dans ce document que la machine est destinée à équiper une ligne de production intégrée (ou combinée), dans laquelle les récipients sont directement formés à partir des préformes à peine moulées, et non à partir de préformes moulées au préalable et temporairement stockées.

Le principal inconvénient de cette machine est son faible ratio cadence / nombre de moules. Comme le montre en effet la figure 5 de la demande EP 2 585 273, il est nécessaire, pour assurer le débit requis par la fabrication des récipients (plusieurs dizaines de milliers par heure, 50 000 étant un standard), de monter une multitude d'unités individuelles de moulage sur un même carrousel alimenté par une source commune de matière. Il en résulte un surdimensionnement du carrousel, alors même que les contraintes de cadence imposent de le faire tourner à grande vitesse.

Un joint tournant assure la distribution de la matière depuis la source de matière vers chaque unité de moulage mais, compte tenu du grand nombre d'unités de moulage, ce joint tournant est de réalisation complexe et de maintenance délicate.

La machine de moulage décrite dans la demande internationale WO 2015/132487 (Sidel) améliore considérablement les techniques connues, car elle comprend une pluralité d'unités de moulage (toutes montées sur un même carrousel) chacune équipée d'une série de noyaux montés sur un porte-noyaux monté à la fois en rotation et en translation, chaque unité de moulage étant relié au joint tournant par un unique conduit d'amenée de la matière plastique en provenance de l'extrudeuse. La structure du joint tournant s'en trouve simplifiée, la distribution de la matière plastique est plus efficace, l'encombrement est réduit et la productivité maintenue ou accrue.

Cependant cette machine est perfectible sur plusieurs points. D'abord, les masses mobiles méritent d'être allégées, ce qui permettrait d'en réduire l'inertie et donc d'augmenter les cadences de production tout en économisant sur l'énergie consommée. Ensuite, cette machine ne permet de mettre en oeuvre qu'un seul procédé de moulage par injection, cependant que la demande des utilisateurs est forte pour fabriquer des préformes en sélectionnant parmi plusieurs procédés différents, selon l'application. Enfin, point commun à toutes les machines connues, on observe un cisaillement de la matière au point d'injection. Ce cisaillement est d'autant plus marqué lorsqu'on réduit l'épaisseur des préformes (inévitable avec l'allègement imposé d'une part par les utilisateurs en raison de l'accroissement des coûts de la matière, et d'autre part par les normes environnementales, chaque année plus contraignantes). Cette dernière difficulté est délicate, car le point d'injection de la préforme demeure au centre du récipient final, et subit par conséquent d'importantes contraintes dues à la pression du contenu.

"Par ailleurs, le document EP2022618 décrit une machine assurant à la fois le moulage par injection de la préforme et l'étirage -soufflage de cette préforme pour former une bouteille. Le document EP0425388 décrit une machine rotative de moulage par injection.

Un premier objectif est de réduire les masses mobiles dans les unités de moulage de préformes.

Un deuxième objectif est de réduire les contraintes de cisaillement appliquées à la matière lors de l'injection.

Un troisième objectif est de proposer une unité de moulage permettant de mettre en oeuvre plusieurs procédés de moulage.

Un quatrième objectif est de proposer une technique de moulage permettant d'alléger les préformes.

A cet effet, il est proposé, en premier lieu, une unité de moulage de préformes en matière plastique, qui comprend :
- un bâti ;
- un porte-moule solidaire du bâti et intégrant au moins un corps de moule à l'empreinte d'une face externe du corps de la préforme, ce corps de moule s'étendant autour d'un axe de moulage ;
- un équipage mobile incluant un chariot, un porte-noyau(x) monté sur le chariot et un arbre de guidage solidaire du chariot, le porte-noyau(x) portant au moins un noyau oblong à l'empreinte d'une face interne de la préforme, le chariot étant monté déplaçable en translation par rapport au bâti entre :
   ∘ une position de moulage dans laquelle le noyau est plongé dans le corps de moule, et
   ∘ une position de démoulage dans laquelle le noyau est écarté axialement du corps de moule,
- un cadre incluant une paire de montants et une paire de traverses reliant rigidement les montants, l'une des traverses étant percée d'un alésage accueillant l'arbre de guidage, le cadre étant pourvu d'un verrou mobile entre une position de verrouillage dans laquelle il s'étend au droit de l'alésage pour bloquer l'arbre en translation, et une position de déverrouillage dans laquelle il est écarté de l'alésage pour libérer l'arbre, ce cadre étant mobile en translation par rapport au bâti entre :
   ∘ une position basse dans laquelle le verrou, en position de verrouillage, bloque le chariot dans sa position de moulage, et
   ∘ une position haute dans laquelle le verrou, en position de verrouillage, bloque le chariot dans une position de retrait, intermédiaire entre la position de moulage et la position de démoulage et dans laquelle le noyau est partiellement logé dans le corps de moule.

Cette position intermédiaire permet d'injecter un volume de matière supérieur au volume final de la préforme. La matière est ensuite comprimée par le noyau replacé dans sa position de moulage par le retour en position basse du cadre. La prise d'empreinte de la préforme est meilleure ; les contraintes de cisaillement de la matière au niveau du point d'injection sont minimisées ; il est par conséquent possible de diminuer l'épaisseur (et donc la masse) de la préforme. En outre, le cadre, rigide, assure un maintien ferme du porte-noyaux en position de retrait, ce qui permet de minimiser la masse de l'équipage mobile.

Selon diverses caractéristiques supplémentaires, prises individuellement ou en combinaison :
- l'unité de moulage comprend au moins un vérin de commande du déplacement du cadre, interposé entre le bâti et la traverse inférieure ;
- le bâti comprend un socle sur lequel est monté le porte-moule, et une console qui s'étend en saillie à partir du socle, la console portant des rails de guidage du chariot, les montants étant montés coulissants par rapport au bâti par l'intermédiaire d'une paire de paliers inférieurs solidaires du socle, et d'une paire de paliers supérieurs solidaires de la console ;
- chaque palier supérieur est formé à l'extrémité d'une bride fixée à la console ;
- le verrou est formé à une extrémité libre d'un bras monté pivotant par rapport à l'un des montants ;
- le porte-noyau porte deux séries de noyaux, et est monté en rotation par rapport au chariot pour placer alternativement chaque série de noyaux dans l'axe de moulage ;
- l'équipage mobile comprend un dispositif de dévêtissement incluant un extracteur monté en translation par rapport au porte-noyau(x), entre une position rétractée, adoptée en position de moulage du chariot, dans laquelle l'extracteur est appliqué contre le porte-noyau(x), et une position déployée, adoptée en position de retrait du chariot, dans laquelle l'extracteur est écarté du porte-noyau(x) tout en étant maintenu appliqué contre le porte-moule ;
- l'extracteur est monté coulissant par rapport au porte-noyau(x) au moyen de doigts de guidage traversant celui-ci avec interposition de ressorts de rappel, et le dispositif de dévêtissement comprend au moins un actionneur mobile entre une position rétractée, adoptée en position de moulage du chariot, dans laquelle l'actionneur permet à l'extracteur d'adopter sa position rétractée, et une position déployée, adoptée en position de retrait du chariot, dans laquelle l'actionneur place, par appui contre les doigts de guidage, l'extracteur en position déployée.

Il est proposé, en deuxième lieu, une machine de moulage de préformes en matière plastique, qui comprend :
- un carrousel tournant,
- une pluralité d'unités de moulage telles que celle présentée ci-dessus, montées sur le carrousel,
- une extrudeuse,
- un joint tournant muni d'une entrée reliée à l'extrudeuse, et d'une pluralité de sorties reliées chacune à une unité de moulage par un conduit d'alimentation pour y délivrer la matière plastique.

Il est proposé, en troisième lieu, un procédé de moulage de préformes en matière plastique au sein d'une unité de moulage telle que présentée ci-dessus, qui comprend les opérations consistant à :
- placer le chariot en position de moulage, le cadre en position basse et le verrou en position de verrouillage ;
- initier l'injection de matière plastique dans le ou chaque corps de moule ;
- tout en maintenant le verrou en position de verrouillage et en poursuivant l'injection, placer le cadre en position haute pour placer le chariot en position de retrait ;
- stopper l'injection ;
- replacer le cadre en position basse pour replacer le chariot en position de moulage ;
- placer le verrou en position de déverrouillage ;
- placer le chariot en position de démoulage.

D'autres objets et avantages de l'invention apparaîtront à la lumière de la description d'un mode de réalisation, faite ci-après en référence aux dessins annexés dans lesquels :
- la figure 1 est une vue en perspective montrant une machine de moulage de préformes en matière plastique, munie d'un carrousel sur lequel sont montées une pluralité d'unités de moulage des préformes avec, en médaillons, des détails de la machine : à gauche, un joint tournant assurant la distribution de la matière ; à droite, un dispositif d'injection dosimétrique assurant l'injection d'une dose prédéterminée de matière dans chaque moule ;
- la figure 2 est une vue en perspective montrant une unité de moulage équipant la machine de la figure 1, dans une position de préparation au moulage d'une rangée interne de préformes ;
- la figure 3 est une vue en perspective montrant le porte-moules de l'unité de moulage de la figure 2, représenté en position ouverte ;
- la figure 4 est une vue en coupe du porte-moules de la figure 3, suivant le plan IV-IV ;
- la figure 5 est une vue similaire à la figure 2, montrant l'unité de moulage dans une position où le porte-moule est fermé, et où le porte-noyau(x) est placé dans l'alignement des moules ;
- la figure 6 est une vue de face de l'unité de moulage de la figure 5 ;
- la figure 7 est vue en coupe partielle de l'unité de moulage de la figure 6, suivant le plan VII-VII ;
- la figure 8 est une vue similaire à la figure 2, montrant l'unité de moulage dans une position de préparation au moulage ;
- la figure 9 est une vue similaire à la figure 8, montrant l'unité de moulage dans une position de moulage ;
- la figure 10 est une vue en coupe similaire à la figure 7, montrant l'unité de moulage dans sa position de la figure 9 ;
- la figure 11 est une vue de détail en coupe montrant un moule et le noyau correspondant en position de moulage ;
- la figure 12 est une vue, à échelle agrandie, d'un détail de la figure 11, pris dans le médaillon XII ;
- la figure 13 est une vue similaire à la figure 2, montrant l'unité de moulage dans une position de retrait, avec un médaillon de détail centré sur le porte-noyaux ;
- la figure 14 est une vue en coupe similaire à la figure 7, montrant l'unité de moulage dans sa position de retrait de la figure 13 ;
- la figure 15 est une vue similaire à la figure 11, montrant le moule et le noyau correspondant en position de retrait ;
- la figure 16 est une vue similaire à la figure 9, montrant l'unité de moulage en position de compression ;
- la figure 17 est une vue similaire à la figure 11, montrant le moule et le noyau correspondant en position de compression ;
- les figures 18 et 19 sont des vues de détail en perspective illustrant l'extraction des préformes moulées ;
- la figure 20 est une vue de dessus de l'unité de moulage, montrant la structure du verrou ;
- la figure 21 est une vue de détail en perspective de la machine, illustrant la liaison entre l'arbre du chariot et le cadre ;
- la figure 22 est une vue similaire à la figure 2, illustrant le dévêtissement des préformes ;
- la figure 23 est une vue similaire à la figure 22, illustrant la remontée du chariot après le dévêtissement des préformes, et la sortie de préformes moulées de leurs moules respectifs.

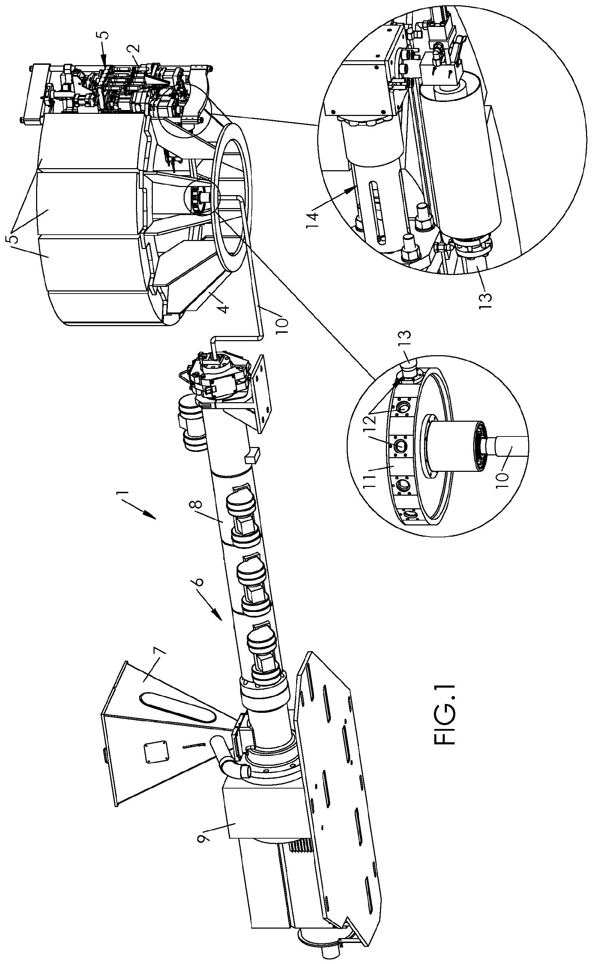

On a représenté sur la figure 1 une machine **1** de moulage de préformes **2** de récipients (typiquement des bouteilles) dans une matière **3** plastique telle que le polytéréphtalate d'éthylène (PET). Cette machine **1** comprend un carrousel **4** tournant, et une pluralité d'unité **5** de moulage des préformes **2,** toutes identiques, montées côte à côte sur le carrousel **4** et entraînées en rotation avec lui.

La machine **1** comprend aussi une extrudeuse **6** agencée pour fournir en continu la matière **3** plastique (en l'espèce du PET) aux unités **5** de moulage. Comme illustré sur la figure 1, cette extrudeuse **6** comprend une trémie **7,** dans laquelle la matière plastique est déversée sous forme de granulés solides, un système de chauffage pour faire fondre la matière, et un cylindre **8** dans lequel est montée une vis d'extrusion sans fin entraînée en rotation par un moteur **9.**

La trémie **7** débouche dans le cylindre **8** à une extrémité amont de celui-ci. A une extrémité aval opposée, le cylindre **8** débouche dans un conduit **10** de raccordement de l'extrudeuse **6** à un joint **11** tournant qui assure la distribution, vers les unités **5** de moulage, de la matière sous forme liquide issue de l'extrudeuse **6.** A cet effet, le joint **11** est muni d'une série de sorties **12** périphériques en nombre égal aux unités **5** de moulage. Sur chacune de ces sorties **12** est branché un conduit **13** d'alimentation (dont un seul est représenté sur le médaillon de détail à gauche sur la figure 1) qui raccorde le joint **11,** via un dispositif **14** d'injection dosimétrique, à une unité **5** de moulage pour y délivrer la matière **3** en provenance de l'extrudeuse **6.**

Chaque préforme **2** comprend un corps **15** sensiblement cylindrique de révolution autour d'un axe **A,** un col **16** ouvert qui s'étend à une extrémité supérieure du corps **15** dont il est séparé par une collerette **17,** et un fond **18** hémisphérique qui ferme le corps **15** à une extrémité inférieure opposée au col **16.** Le col **16** se termine, à l'opposé du corps, par une face **19** annulaire définissant un buvant.

Chaque unité **5** de moulage comprend, en premier lieu, un bâti **20,** incluant un socle **21,** qui s'étend horizontalement en position normale de fonctionnement de la machine 1 et par lequel l'unité **5** de moulage est fixée sur le carrousel **4,** et une console **22** rigidement solidaire du socle **21** et qui s'étend verticalement en saillie à partir de celui-ci. Le bâti **20** (socle **21** et console **22**) est avantageusement réalisé en acier, de préférence un acier à haute limite élastique, compte tenu des fortes sollicitations auxquelles il est soumis (voir ci-après). Le bâti **20** comprend en outre une paire de rails **23** de guidage solidaires de la console **22,** à laquelle ils sont fixés par ex. au moyen de vis.

L'unité **5** de moulage comprend, en deuxième lieu, un cadre **24** comprenant une paire de montants **25** verticaux montés coulissants par rapport au bâti **20** et une paire de traverses horizontales, à savoir une traverse **26** inférieure et une traverse **27** supérieure, reliant rigidement les montants **25.**

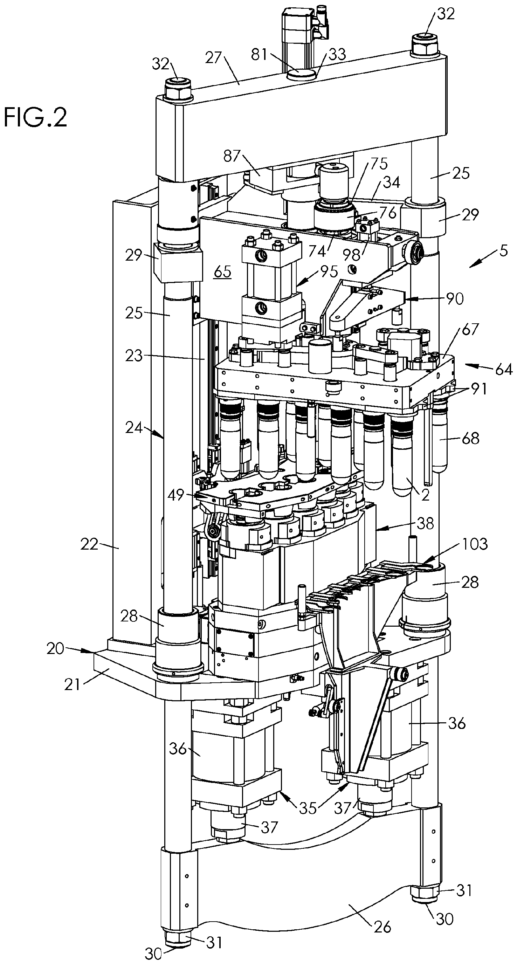

Plus précisément, les montants **25** sont montés coulissants par rapport au bâti **20,** suivant une course prédéterminée, par l'intermédiaire d'une paire de paliers **28** inférieurs solidaires du socle **21,** et d'une paire de paliers **29** supérieurs solidaires de la console **22.** Comme on le voit sur la figure 2, les montants **25** s'étendent de part et d'autre, verticalement, du socle **21** qu'ils traversent. Dans l'exemple illustré, les montants **25** se présentent sous forme de barreaux cylindriques, à section par exemple circulaire.

La traverse **26** inférieure relie des extrémités inférieures des montants **25,** situées d'un côté inférieur du socle **21.** La traverse **26** inférieure est par exemple emmanchée sur des tiges **30** d'extrémité inférieure des montants **25,** de moindre diamètre, en y étant fixée au moyen d'écrous **31** vissés sur des extrémités filetées de ces tiges **30.**

La traverse **27** supérieure relie des extrémités supérieures des montants **25,** situées d'un côté supérieur du socle **21,** à l'opposé de la traverse **26** inférieure. De la même manière que celle-ci, la traverse **27** supérieure est par exemple emmanchée sur des tiges **32** d'extrémité supérieure des montants **25,** de moindre diamètre, en y étant fixée au moyen d'écrous **31** vissés sur des extrémités filetées de ces tiges **30.**

La traverse **27** supérieure est percée d'un alésage **33** central vertical dont la fonction apparaîtra ci-après.

Chaque palier **28** inférieur se présente avantageusement sous forme d'une douille lisse ou à billes, rigidement fixée sur le socle **21** par frettage, vissage ou soudage (ou par tout autre moyen permettant d'obtenir une fixation rigide et durable).

Selon un mode de réalisation illustré sur les figures, chaque palier **29** supérieur est formé à l'extrémité d'une bride **34** qui s'étend transversalement par rapport à la console **22** et est fixée à celle-ci par vissage ou par soudage (ou par tout autre moyen permettant d'obtenir une fixation rigide et durable). Chaque palier **29** supérieur peut être lisse ou à billes.

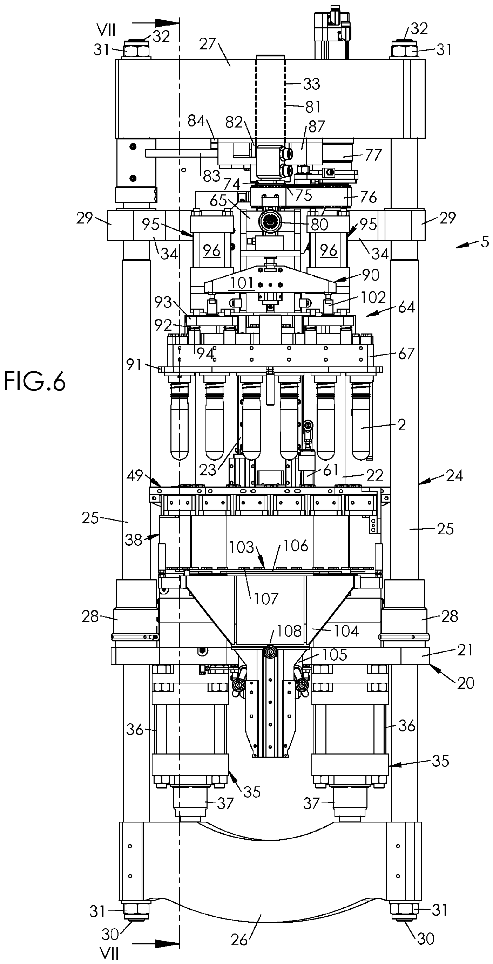

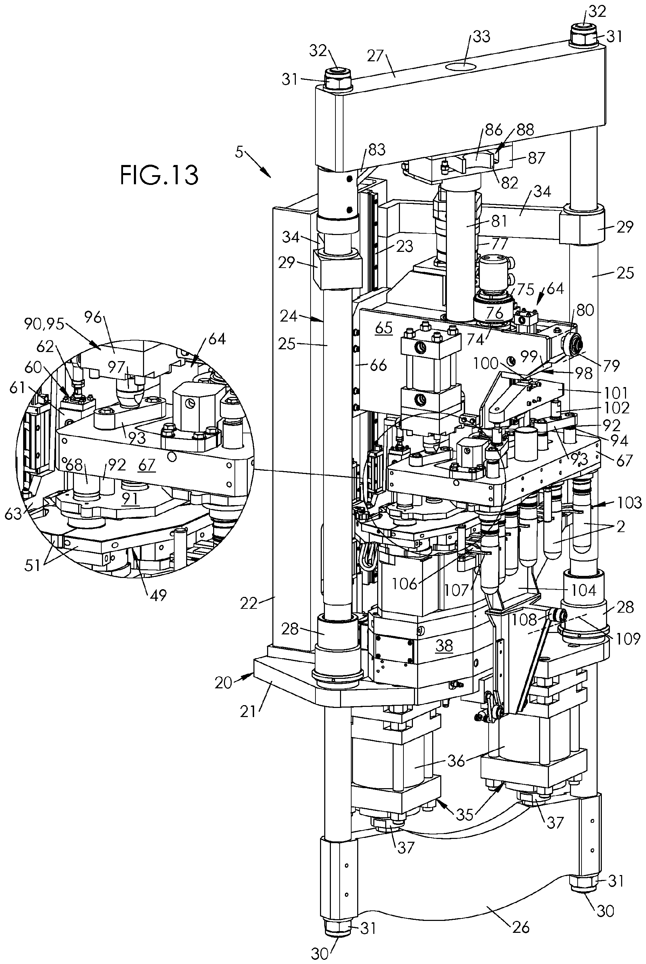

L'unité **5** de moulage comprend au moins un vérin **35** (au nombre de deux dans l'exemple illustré) interposé(s) entre le bâti **20** et la traverse **26** inférieure. Plus précisément, chaque vérin **35** comprend un corps **36** fixé sur une face inférieure du socle **21,** et une tige **37** montée coulissante par rapport au corps **36** et fixée sur la traverse **26** inférieure. De la sorte, ce(s) vérin(s) **35** commande(nt) le déplacement du cadre **24,** via la traverse **26** inférieure, en translation verticale entre une position basse, illustrée sur les figures 2, 5, 6, 8, 9, 16, 22 et 23, et une position haute, surélevée par rapport à la position basse et illustrée sur la figure 13. La raison de cette mobilité du cadre sera expliquée ci-après.

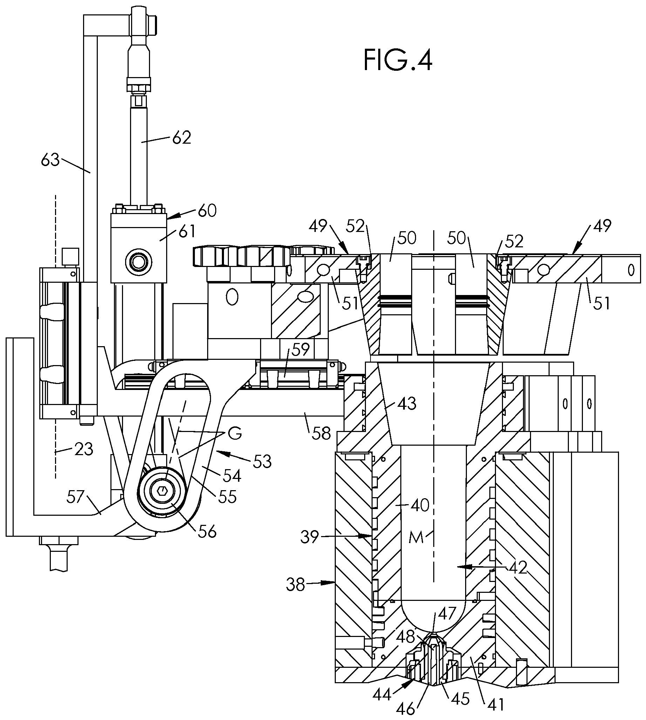

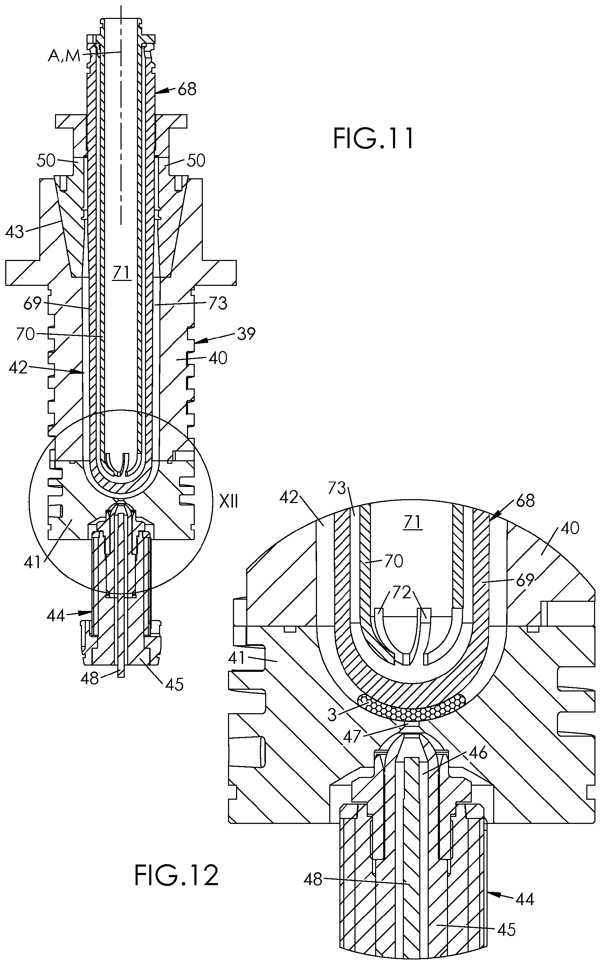

L'unité **5** de moulage comprend, en troisième lieu, un porte-moule **38** solidaire du bâti **20** en étant fixé sur le socle **21** (par ex. par vissage) entre les montants **25.** Ce porte-moule **38** intègre au moins un corps **39** de moule (visible en coupe sur la figure 4 et détaillé sur les figures 11, 15 et 17).

Le corps **39** de moule comprend une paroi **40** latérale cylindrique et un fond **41** de moule hémisphérique superposés (et éventuellement formés, comme dans l'exemple illustré, de deux pièces distinctes assemblées), qui définissent ensemble une cavité **42** à l'empreinte d'une face externe du corps **15** de la préforme **2.**

Le corps **39** de moule s'étend autour d'un axe **M** de moulage qui est confondu avec l'axe **A** central de la préforme **2** en cours de formage (ou tout juste formée). Comme on le voit notamment sur la figure 4, la paroi **40** latérale se prolonge, à l'opposé du fond **41** de moule, par une section supérieure en saillie définissant une réserve **43** tronconique dans le prolongement axial de la cavité **42.**

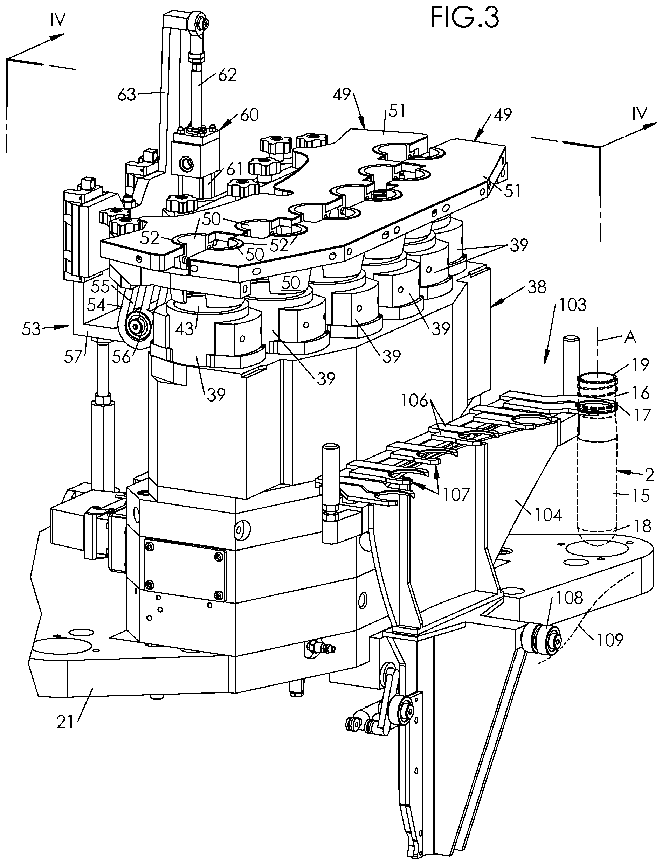

Selon un mode de réalisation préféré illustré notamment sur la figure 3, le porte-moule **38** intègre plusieurs corps **39** de moules, en l'occurrence au nombre de six, disposés côte à côte, avantageusement suivant une ligne courbe, tel qu'un arc de cercle dont le rayon correspond au rayon d'une roue de transfert par laquelle les préformes **2** formées sont destinées à être prises en charge.

Le porte-moule **38** intègre par ailleurs un système **44** d'injection de la matière **3** plastique dans chaque corps **39** de moule. Ce système **44** d'injection comprend, pour chaque corps **39** de moule :
- un canon **45** tubulaire pourvu d'un conduit **46** central en communication fluidique d'une part avec le dispositif **14** d'injection dosimétrique et d'autre part avec la cavité **42** au travers d'un trou **47** percé dans le fond **41** de moule, et
- une aiguille **48** qui s'étend dans le conduit **46** et y est montée en translation entre une position d'obturation dans laquelle l'aiguille obture **48** le trou **47** et bloque ainsi l'injection de la matière **3** dans la cavité **42,** et une position d'injection (illustrée notamment sur les figures 12, 15 et 17) dans laquelle l'aiguille **48** est écartée axialement du trou **47,** mettant ainsi en communication le conduit **46** avec la cavité **42** via le trou **47.**

Le déplacement de l'aiguille **48** est par exemple commandé par un vérin pneumatique (ou hydraulique) ayant un piston solidaire de l'aiguille **48.**

Le porte-moule **38** comprend en outre une paire de tiroirs **49** portant chacun au moins une demi-bague **50** de col ayant une face interne à l'empreinte du col **16** d'une préforme, et une face externe tronconique. En pratique, chaque tiroir **49** porte un nombre de demi-bagues **50** égal au nombre de corps **39** de moules - six dans l'exemple illustré sur la figure 3. Comme on le voit sur cette figure, chaque tiroir **49** comprend une plaque **51** munie, sur un bord interne, d'une série d'échancrures **52** semi-circulaires dans chacune desquelles est logée (en étant fixée par exemple par vissage) une demi-bague **50** de col.

Chaque demi-bague **50** est positionnée à l'aplomb d'un corps **39** de moule, et les demi-bagues **50** sont positionnées côte à côte suivant le même profil que les corps **39** de moules (en l'occurrence suivant un arc de cercle, comme on le voit bien sur la figure 3).

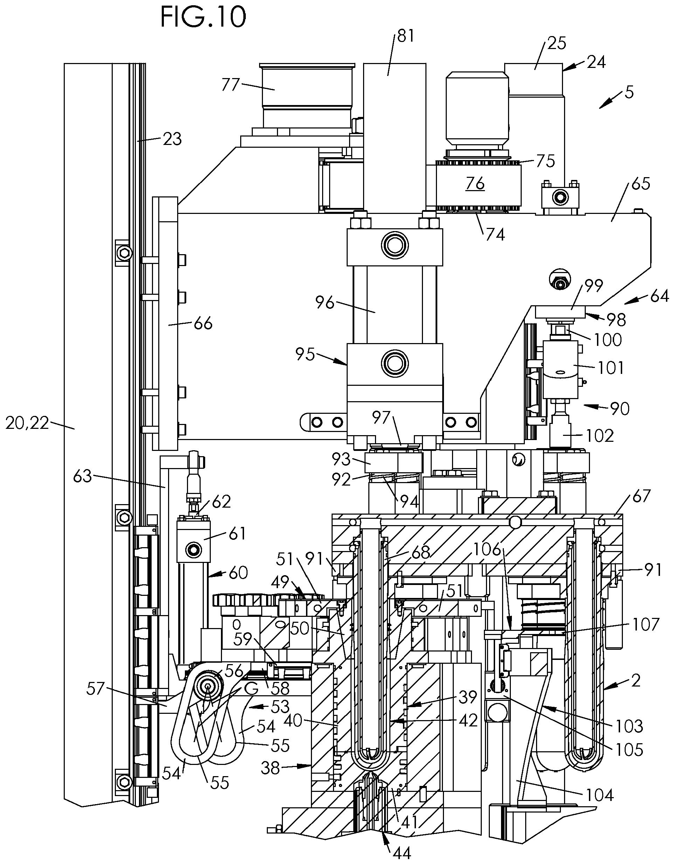

Les tiroirs **49** sont montés l'un en regard de l'autre de manière que leurs plaques **51** soient coplanaires et leurs échancrures **52** en vis-à-vis. Chaque tiroir **49** est monté mobile par rapport au(x) corps **39** de moule(s) entre :
- une position de démoulage (figure 4) dans laquelle chaque demi-bague **50** est écartée, à la fois axialement vers le haut, et latéralement, de la réserve **43** tronconique, et
- une position de moulage (cf. notamment figures 10 et 11) dans laquelle chaque demi-bague **50** est logée dans la réserve **43** tronconique, une paire de demi-bagues **50** ainsi positionnées formant conjointement l'empreinte du col **16** de la préforme **2.**

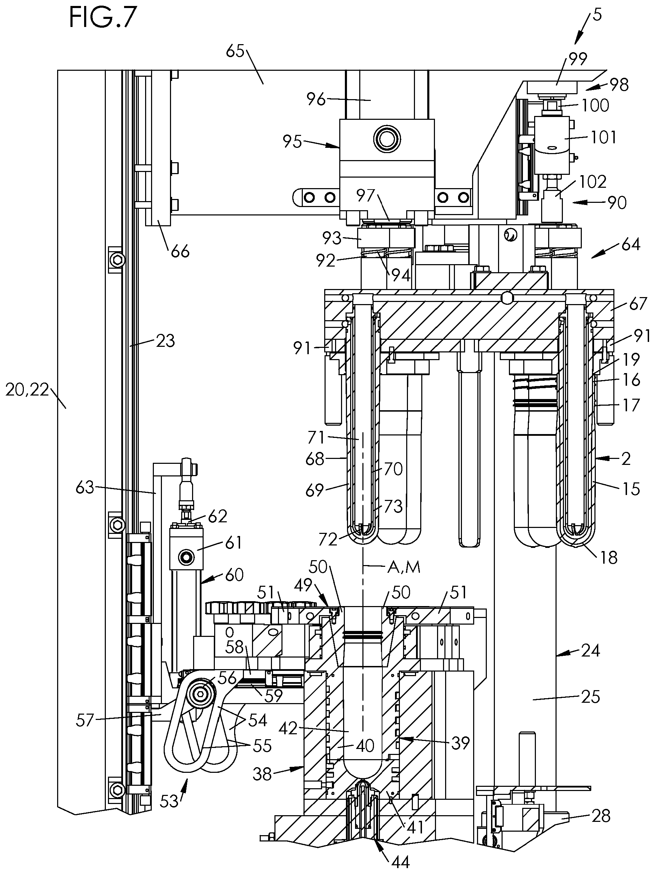

Comme on le voit sur la figure 4, le porte-moule **38** comprend un système **53** de guidage de chaque tiroir **49,** suivant une direction **G** de guidage inclinée par rapport à la verticale (c'est-à-dire par rapport à l'axe **M** de moulage). Ce système **53** comprend, pour chaque tiroir **49,** une coulisse **54** solidaire de la plaque **51** et percée d'une rainure **55** oblongue, inclinée suivant la direction G de guidage, et un galet **56** (tel qu'un roulement à billes) solidaire de la console **22** par l'intermédiaire d'un support **57** et logé dans la rainure **55** pour y rouler d'une extrémité inférieure (en position de démoulage, cf. figure 4) à une extrémité supérieure opposée (en position de moulage, cf. figure 7, 10, 14).

Le système **53** de guidage comprend en outre une platine **58** sur laquelle les tiroirs **49** sont montés coulissants suivant une direction horizontale, au moyen de rails **59** de guidage. Cette platine **58** est elle-même mobile en translation verticale par rapport à la console **22,** en étant montée coulissante sur les rails **59.** Le système **53** de guidage comprend, en dernier lieu, un vérin **60** de commande muni d'un corps **61** de vérin solidaire du support **57** fixe, et d'une tige **62** montée coulissante par rapport au corps **61** de vérin et solidaire, par l'intermédiaire d'une potence **63,** de la platine **58.**

Lorsqu'elle est animée d'un mouvement ascendant en sortant du corps **61** de vérin (qui demeure fixe), la tige **62** entraîne avec elle vers le haut, via la potence **63,** la platine **58** (qui coulisse sur les rails **23**) et les tiroirs **49** qu'elle porte.

Lors du mouvement ascendant des tiroirs **49,** les coulisses **54** sont contraintes de glisser obliquement sur les galets **56** suivant la direction G de guidage, et écartent ainsi l'un de l'autre les tiroirs **49** qui coulissent sur les rails **59,** jusqu'à la position de démoulage où le galet **56** forme une butée de fin de course qui vient s'appliquer contre l'extrémité inférieure de la rainure **55** (figure 4).

A l'inverse, lorsqu'elle est animée d'un mouvement descendant en rentrant dans le corps **61** de vérin (qui demeure fixe), la tige **62** entraîne avec elle vers le bas, via la potence **63,** la platine **58** (qui coulisse sur les rails **23**) et les tiroirs **49** qu'elle porte.

Lors du mouvement descendant des tiroirs **49,** les coulisses **54** sont contraintes de glisser obliquement sur les galets **56** suivant la direction **G** de guidage, et rapprochent ainsi l'un de l'autre les tiroirs **49** qui coulissent sur les rails **59,** jusqu'à la position de moulage où le galet **56** forme une butée de fin de course qui vient s'appliquer contre l'extrémité supérieure de la rainure **55** (figure 7).

L'unité **5** de moulage comprend, en quatrième lieu, un équipage **64** mobile, qui inclut un chariot **65** monté en translation sur la console **22** par l'intermédiaire de coulisses **66** qui coopèrent avec les rails **23** pour en assurer le guidage linéaire vertical, et un porte-noyau(x) **67** monté sur le chariot **65,** ce porte-noyau(x) **67** portant au moins un noyau **68** oblong à l'empreinte d'une face interne de la préforme **2.** Le (ou chaque) noyau 68 est destiné à venir s'emboîter dans le corps **39** de moule (avec les tiroirs **49** en position de moulage) de sorte à définir, conjointement avec lui et les demi-bagues **50** de col, la contre-empreinte complète d'une préforme **2.**

Comme on le voit bien sur les figures 11 et 12, chaque noyau **68** est creux et comprend une enveloppe **69** externe (à l'empreinte de la face interne de la préforme **2**) et un coeur **70,** logé dans l'enveloppe **69** externe et qui définit un conduit **71** d'injection d'un fluide caloporteur (typiquement de l'eau) destiné à maintenir la température de l'enveloppe **69** à une valeur modérée (par exemple comprise entre 10°C et 20°C) pour refroidir la matière **3** plastique injectée. A cet effet, le coeur **70** est pourvu, à une extrémité inférieure, d'échancrures **72** par lesquelles le fluide caloporteur s'épanche dans un interstice **73** ménagé entre le cœur **70** et l'enveloppe **69** pour être évacué après avoir réalisé un échange thermique avec la matière **3** chaude qu'il contribue ainsi à refroidir.

Selon un mode de réalisation préféré illustré sur les figures, le porte-noyaux **67** porte au moins une rangée de noyaux **68** comprenant un nombre de noyaux **68** égal au nombre de corps **39** de moules, ces noyaux **68** s'étendant côte à côte suivant le même profil (ici courbe, et plus précisément circulaire) et le même écartement que les corps **39** de moules dans lesquels ils sont destinés à être logés.

En fait, dans l'exemple de réalisation illustré, le porte-noyaux **67** porte deux rangées identiques de noyaux **68,** à savoir une rangée primaire et une rangée secondaire, et le porte-noyaux **67** est monté en rotation par rapport au chariot **65,** entre une position d'alignement primaire dans laquelle les noyaux **68** de la rangée primaire sont alignés avec les corps **39** de moules tandis que les noyaux **68** de la rangée secondaire en sont écartés, et une position d'alignement secondaire, pivotée de 180° par rapport à la position d'alignement primaire et dans laquelle ce sont les noyaux **68** de la rangée secondaire qui sont alignés avec les corps **39** de moules tandis que les noyaux **68** de la rangée primaire en sont écartés.

Pour permettre la rotation du porte-noyaux **67** par rapport au chariot **65,** le porte-noyaux **67** est solidaire d'un axe **74** logé dans un alésage formé dans le chariot **65** avec interposition de paliers (tels que des roulements à billes). A une extrémité supérieure dépassant du chariot **65,** l'axe **74** porte un pignon **75** sur lequel circule une courroie **76** entraînée par un moteur **77.**

Pour faire passer le porte-noyaux **67** de sa position d'alignement primaire à sa position d'alignement secondaire et inversement, le moteur **77** est mis en route pendant une durée prédéterminée. Le moteur **77** entraîne la courroie **76,** qui, engrenant le pignon **75,** provoque la rotation de l'axe **74** et ainsi du porte-noyaux **67** selon une amplitude angulaire de 180°, indifféremment dans le sens horaire ou antihoraire. Le moteur **77** est avantageusement du type sans-balais, qui offre l'avantage d'être précis angulairement.

La suspension du porte-noyaux **67** au chariot **65** est par exemple réalisée au moyen d'un ou plusieurs circlips monté(s) sur l'axe **74** et formant une butée d'arrêt pour celui-ci sur un (ou plusieurs) épaulement(s) formés sur le chariot **65.**

Le chariot **65** est monté déplaçable en translation par rapport au bâti **20** (et plus précisément par rapport à la console **22,** via les rails **23** et les coulisses **66**) entre :
∘ une position de moulage dans laquelle le ou chaque noyau **68** (dans la position d'alignement primaire) est plongé dans un corps **39** de moule de sorte qu'un interstice **78** d'épaisseur sensiblement constante est défini entre le noyau **68** et le corps **39** de moule (cf. figure 12), et
∘ une position de démoulage, décalée axialement (vers le haut) par rapport à la position de moulage et dans laquelle le ou chaque noyau **68** (dans la position d'alignement primaire) est écarté axialement du corps **39** de moule (cf. figure 7).

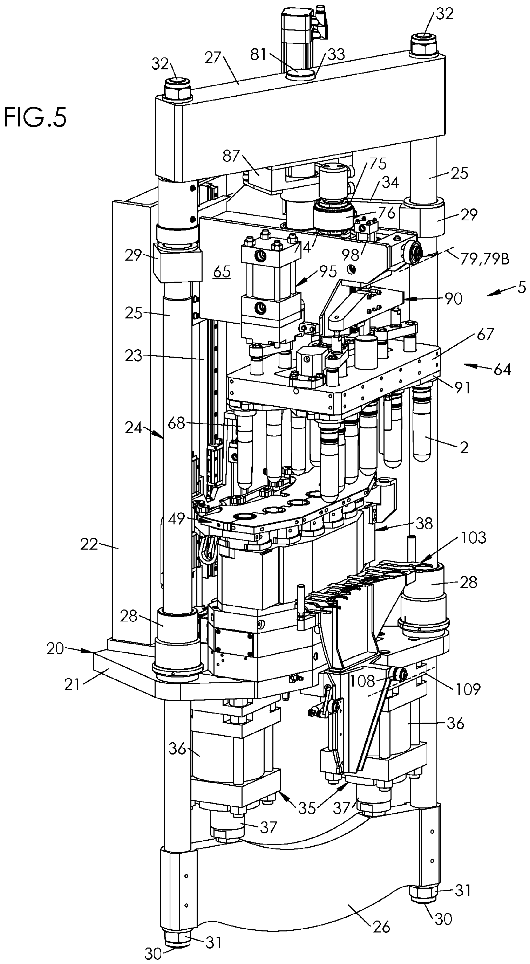

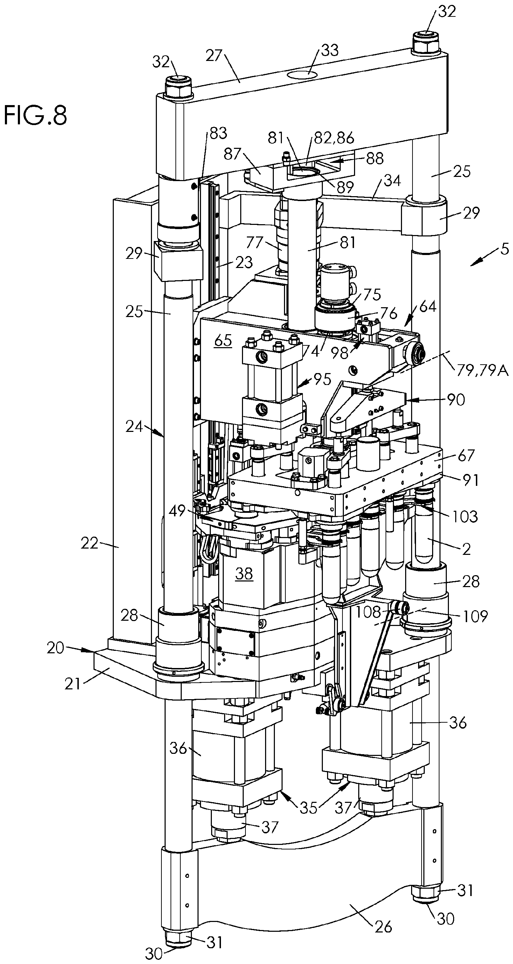

Le mouvement de translation du chariot **65** est commandé par un chemin **79** de came supérieur avec lequel coopère un suiveur **80** de came (en l'occurrence sous forme d'un galet) monté sur le chariot **65.** Le chemin **79** de came supérieur, illustré en pointillés sur la figure 5, s'étend à la périphérie du carrousel **4,** sur au moins une portion angulaire du parcours de l'unité **5** de moulage. Ce chemin **79** de came comprend une portion **79A** basse, qui lorsque le suiveur **80** de came s'y trouve permet au chariot **65** d'adopter sa position de moulage sous l'effet de son propre poids (figure 8), et une portion **79B** surélevée qui, lorsque le suiveur **80** de came s'y trouve, soulève le chariot **65** pour le placer dans sa position de démoulage (figure 5).

Pour compléter son guidage en translation, l'équipage **64** mobile est en outre muni d'un arbre **81** solidaire du chariot, cet arbre **81** étant logé (avec possibilité de coulissement, dans des conditions qui seront expliquées ci-après) dans l'alésage **33** de la traverse **27** supérieure. L'arbre **81** s'étend à l'aplomb du porte-moule **38.**

L'équipage **64** mobile peut être libre de coulisser verticalement par rapport au cadre **24,** ou être au contraire immobilisé par rapport à celui-ci.

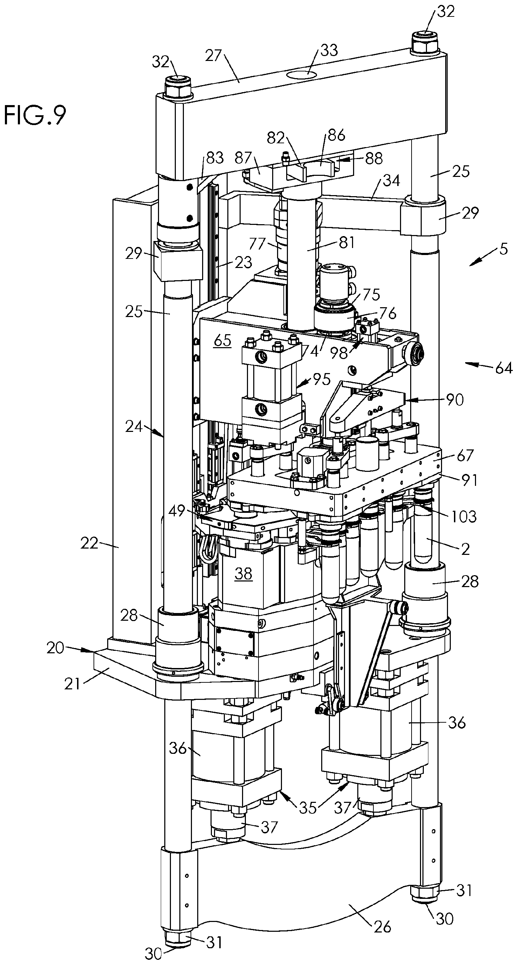

A cet effet, le cadre **24** est pourvu d'un verrou **82** mobile entre une position de déverrouillage dans laquelle il est écarté de l'alésage **33** pour libérer l'arbre **81** et ainsi permettre à l'équipage **64** mobile de coulisser par rapport au cadre **24** (figures 8, 20, 21), et une position de verrouillage dans laquelle le verrou **82** s'étend au droit de l'alésage **33** pour bloquer l'arbre **81** (et donc l'équipage **64** mobile) en translation (figures 9, 13, 16).

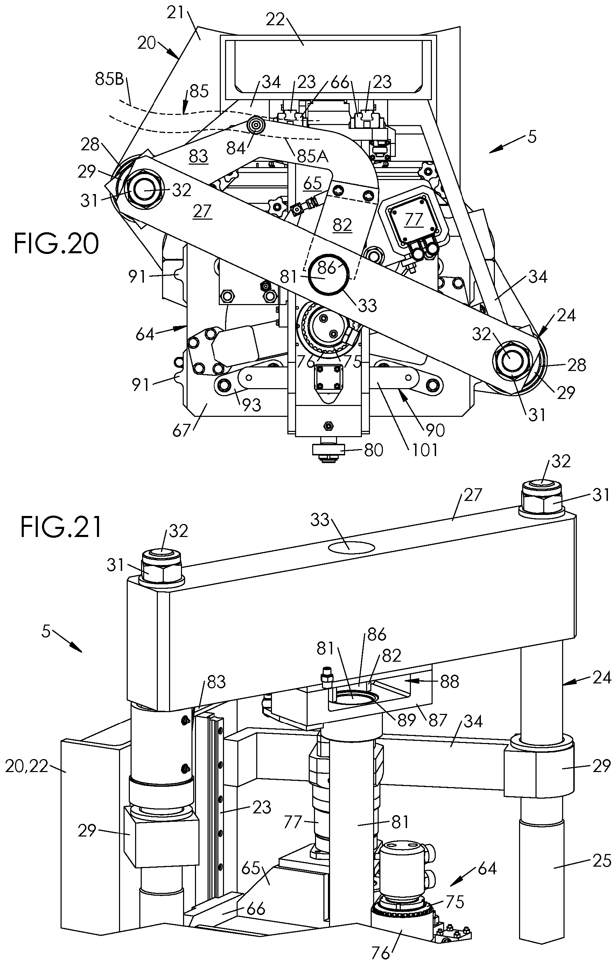

Selon un mode de réalisation illustré sur les figures, le verrou **82** est formé à une extrémité libre d'un bras **83** monté pivotant par rapport à l'un des montants **25.** Dans l'exemple illustré (cf. figure 20), le bras **83** porte un suiveur **84** de came (ici sous forme d'un galet) qui coopère avec une came **85** interne (en pointillés sur la figure 20), fixe par rapport au carrousel **4,** et qui présente une portion **85A** en retrait qui, lorsque le galet **84** s'y trouve, place le verrou **82** en position de déverrouillage, et une portion **85B** en saillie qui, lorsque le galet **84** s'y trouve, place le verrou **82** en position de verrouillage.

Le bras **83** peut être coudé, et le verrou **82** se présente par exemple sous forme d'une plaque fixée sur le bras **83** et munie d'une échancrure **86** complémentaire de l'arbre **81** de guidage, pour pouvoir laisser celui-ci coulisser par rapport à la traverse **27** supérieure (et donc par rapport au cadre **24**).

Comme on le voit bien sur la figure 21, le cadre **24** est pourvu d'un étrier **87** solidaire de la traverse **27** supérieure, sur une face inférieure de laquelle il est fixé (par ex. au moyen de vis). Cet étrier **87,** en forme de U, présente une ouverture **88** dans laquelle vient librement coulisser le verrou **82,** et un trou **89** coaxial à l'alésage **33,** dans lequel peut coulisser l'arbre **81** de guidage du chariot **65.**

Lorsque le chariot **65** est dans sa position de moulage, l'arbre **81** est sorti de l'alésage **33,** son extrémité supérieure étant logée dans le trou **89** de l'étrier **87,** dont il ne dépasse pas. Dans ces conditions, le verrou **82** peut librement être déplacé de sa position de déverrouillage à sa position de verrouillage, et inversement. Lorsque le verrou **82** est placé (par le galet **84** circulant dans la portion **85B** en saillie de la came **85** interne) dans sa position de verrouillage où, logé dans l'ouverture **88** de l'étrier **87,** il obture le passage entre le trou **89** et l'alésage **33,** il empêche toute translation ascendante de l'arbre **81** (et donc du chariot **65**).

En position basse du cadre **24,** le verrou **82,** lui-même en position de verrouillage, bloque le chariot **65** dans sa position de moulage.

En position haute du cadre **24,** le verrou **82** resté en position de verrouillage bloque le chariot **65** (et chaque noyau **68**) dans une position de retrait, illustrée sur les figures 13, 14 et 15, intermédiaire entre la position de moulage et la position de démoulage et dans laquelle le noyau **68** est partiellement logé dans le corps **39** de moule. On peut à cet effet entraîner le chariot **65** vers le haut par des moyens mécaniques (par ex. par une portion transitoire de la came **79** supérieure sur laquelle roule le galet **80**), ou laisser la pression d'injection de la matière **3** plastique le repousser. Dans ces conditions, le verrou **82** forme pour l'arbre **81** (et donc pour le chariot **65**) une butée de fin de course.

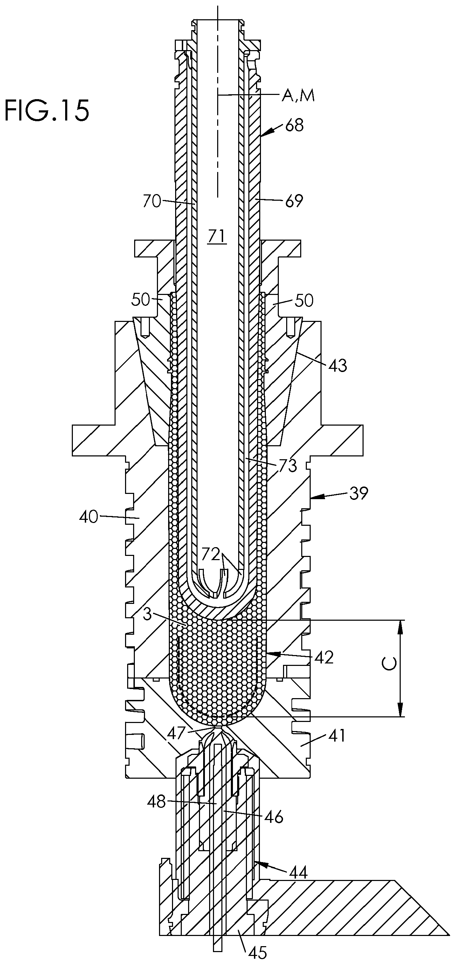

La course, notée **C,** de chaque noyau **68** (c'est-à-dire du chariot **65**) entre la position de moulage (en pointillés sur la figure 15) et la position de retrait est fonction du volume de la préforme **2** (c'est-à-dire de ses dimensions). Dans l'exemple illustré, cette course est de quelques dizaines de millimètres, typiquement de l'ordre de 45 mm.

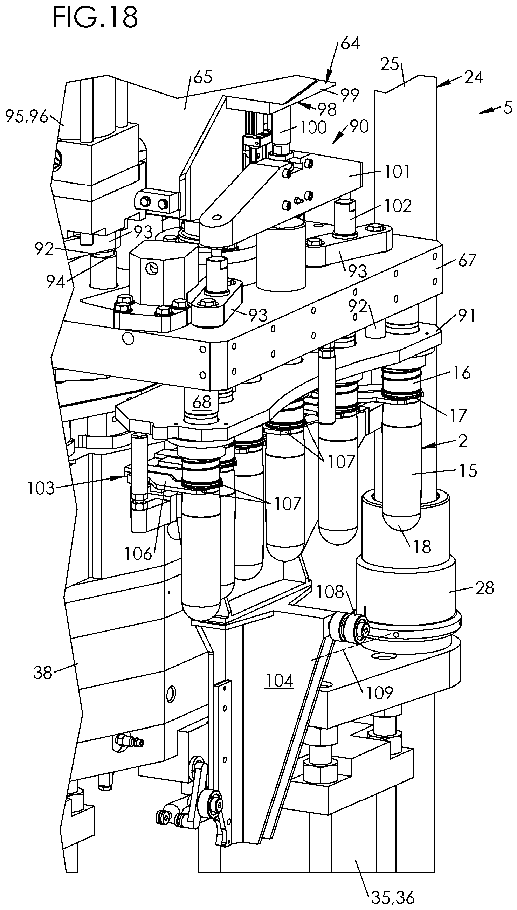

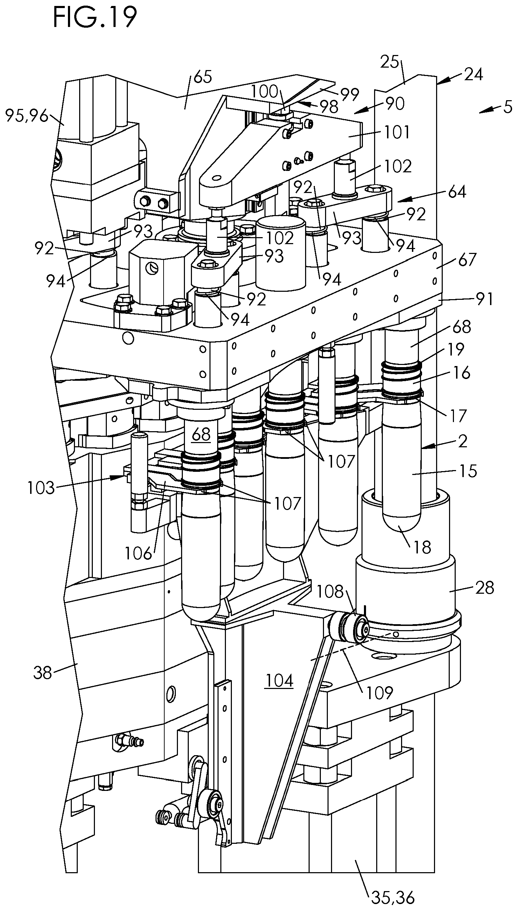

Selon un mode de réalisation illustré notamment sur les figures 18 et 19, l'équipage **64** mobile comprend un dispositif **90** de dévêtissement, qui inclut, pour chaque rangée de noyaux **68,** un extracteur **91** monté en translation par rapport au porte-noyaux **67,** entre :
- une position rétractée, adoptée en position de moulage du chariot **65** (figure 10), dans laquelle l'extracteur **91** est appliqué contre une face inférieure du porte-noyaux **67,** et
- une position déployée, adoptée en position de retrait du chariot **65,** dans laquelle l'extracteur **91** est écarté du porte-noyaux **67.**

En position d'alignement secondaire, la position déployée de l'extracteur **91** permet de décoller les préformes **2** de leurs noyaux **68** respectifs en vue de les évacuer de l'unité **5** de moulage (voir ci-après).

En position d'alignement primaire, la position déployée de l'extracteur **91** lui permet de se maintenir appliqué contre le porte-moule **38,** et plus précisément contre les demi-bagues **50** pour garder hermétiquement fermée la cavité **42** lorsque le chariot **65** est placé en position de retrait par la remontée du cadre **24** vers sa position haute.

Chaque extracteur **91** est monté coulissant par rapport au porte-noyaux **67** au moyen de doigts **92** de guidage qui traversent celui-ci et sont reliés deux à deux par des barreaux **93** de liaison. Des ressorts **94** de rappel sont montés sur les doigts **92** en étant interposés entre le porte-noyaux **67** et le barreau **93** de liaison pour solliciter en permanence l'extracteur **91** vers sa position rétractée.

Le dispositif **90** de dévêtissement comprend un actionneur **95** primaire, monté sur le chariot **65** à l'aplomb des noyaux **68** en position d'alignement primaire, et mobile entre une position rétractée (adoptée en position de moulage du chariot **65**), dans laquelle l'actionneur **95** primaire permet à l'extracteur **91** d'adopter sa position rétractée, et une position déployée (adoptée en position de retrait du chariot **65**), dans laquelle l'actionneur **95** primaire place, par appui contre les doigts **92** de guidage, l'extracteur **91** en position déployée pour garder fermée la cavité **42.**

Selon un mode de réalisation illustré sur la figure 13, l'actionneur **95** primaire se présente sous forme d'un vérin comprenant un corps **96** de vérin solidaire du chariot **65,** et une tige **97** de vérin montée coulissante par rapport au corps **96** de vérin.

En position rentrée de la tige **97,** celle-ci est écartée des barreaux **93** de liaison et permet ainsi à l'extracteur **91** d'adopter, sous l'effet de rappel des ressorts **94,** sa position rétractée (figure 10).

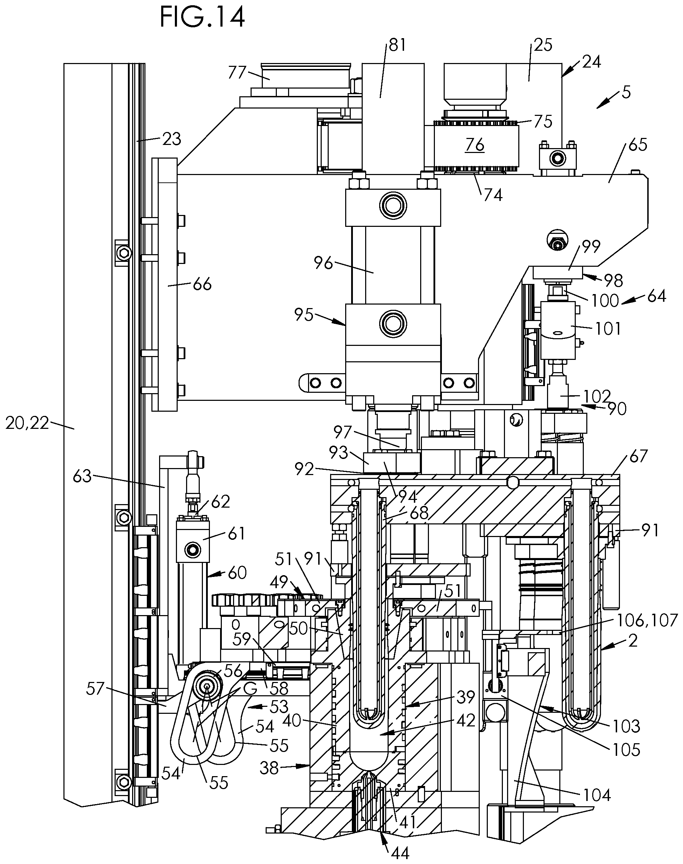

En position sortie de la tige **97,** celle-ci vient appuyer (verticalement, vers le bas) sur les barreaux **93** de liaison et, par leur intermédiaire, place l'extracteur **91** dans sa position déployée (figures 13, 14).

Le dispositif **90** de dévêtissement comprend en outre un actionneur **98** secondaire, monté sur le chariot **65** à l'aplomb des noyaux **68** placés en position d'alignement secondaire, et monté mobile entre une position rétractée (adoptée en position de moulage du chariot **65**), dans laquelle l'actionneur **98** secondaire permet à l'extracteur **91** d'adopter sa position rétractée, et une position déployée (adoptée en position de retrait du chariot **65**), dans laquelle l'actionneur **98** secondaire place, par appui contre les doigts **92** de guidage, l'extracteur **91** en position déployée.

Selon un mode de réalisation illustré sur les figures 18 et 19, cet actionneur **98** secondaire se présente sous forme d'un vérin comprenant un corps **99** de vérin solidaire du chariot **65,** et une tige **100** de vérin montée coulissante verticalement par rapport au corps **99** de vérin et portant, à son extrémité libre, une barre **101** transversale munie de poussoirs **102.**

En position rentrée de la tige **100,** les poussoirs **102** sont écartés des barreaux **93** de liaison et permettent ainsi à l'extracteur **91** d'adopter, sous l'effet de rappel des ressorts **94,** sa position rétractée (figure 18).

En position sortie de la tige **100,** les poussoirs **102** viennent appuyer (verticalement, vers le bas) sur les barreaux **93** de liaison et, par leur intermédiaire, placent l'extracteur **91** dans sa position déployée (figure 19) pour dévêtir les préformes **2** de leurs noyaux **68** respectifs.

L'unité **5** de moulage comprend, en cinquième lieu, un dispositif **103** de préhension des préformes **2** moulées ainsi dévêtues de leurs noyaux **68.**

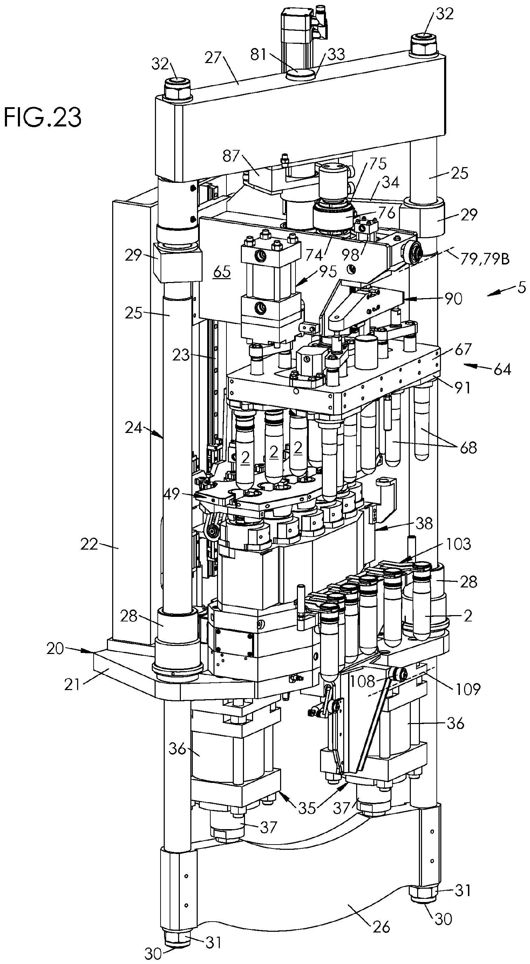

Ce dispositif **103** de préhension, bien visible sur les figures 3, 18 et 19, comprend un support **104** monté coulissant verticalement sur le socle **21** par l'intermédiaire d'une glissière **105** (visible sur la figure 10), entre une position haute (cf. notamment figures 18 et 19) et une position basse (figure 23).

Le dispositif **103** de préhension comprend une paire de peignes **106** qui définissent ensemble une série de pinces **107** de préhension des préformes **2,** situées à l'aplomb des noyaux **68** placés dans la position d'alignement secondaire, et sont agencés suivant un profil identique (courbe, et plus précisément circulaire dans l'exemple illustré). Ces peignes **106** sont montés coulissants transversalement entre une position de libération dans laquelle les pinces **107** sont ouvertes pour permettre aux préformes **2** formées d'être amenées verticalement à leur niveau, et pour permettre également aux préformes **2** d'être ensuite prises en charge par une roue (ou tout autre dispositif) de transfert externe, et une position de préhension dans laquelle les préformes **2** sont maintenues par les pinces **107** sous leur collerette **17.**

Le dispositif **103** de préhension porte un suiveur **108** de came (ici sous forme d'un galet, tel qu'un roulement à billes), qui coopère avec une came **109** inférieure externe au carrousel **4,** fixe par rapport à celui-ci, pour placer alternativement le dispositif **103** de préhension dans sa position haute (où les préformes **2** seront agrippées par les pinces **107**) et dans sa position basse (où les préformes **2** seront prises en charge par la roue - ou le dispositif - de transfert externe).

On décrit à présent la mise en oeuvre de l'unité **5** de moulage pour la fabrication d'une préforme **2,** en partant de la configuration, illustrée sur la figure 2, dans laquelle des préformes **2** viennent d'être démoulées, le porte-noyaux **67** étant en cours de rotation pour placer la rangée de noyaux **68** vêtus de préformes **2** en position d'alignement secondaire à l'aplomb du dispositif **103** de préhension (les préformes **2** auparavant tenues par celui-ci venant d'être prises en charge par la roue ou le dispositif de transfert externe), et pour placer les noyaux **68** nus en position d'alignement primaire. Le cadre **24** est dans sa position basse. Le galet **84** commandant le verrou **82** coopère avec la portion **85A** en retrait de la came **85** interne, de sorte que le verrou **82** est dans sa position déverrouillée. Le galet **80** du chariot **65** coopère avec la portion **79B** surélevée du chemin **79** de came supérieur, de sorte que l'équipage **64** mobile est en fin de course haute, l'arbre **81** de guidage étant logé dans l'alésage **33** de la traverse **27** supérieure. Les tiroirs **49** sont en position de démoulage (figures 3, 4). Le dispositif **103** de préhension est dans sa position basse et les pinces **107** sont ouvertes en position de libération. L'actionneur **95** primaire est en position rétractée, de même que l'extracteur **91.**

A partir de cette configuration, le porte-noyaux **67** est d'abord pivoté (au moyen du moteur **77** qui, par l'intermédiaire de la courroie **76** et du pignon **75,** fait tourner l'axe **74**) dans une position où les noyaux **68** nus sont placés dans la position d'alignement primaire et les noyaux **68** vêtus de préformes **2** dans la position d'alignement secondaire. Simultanément, les tiroirs **49** sont placés en position de moulage. A cet effet, la tige **62** de vérin est rentrée dans le corps **61** de vérin, ce qui provoque la descente de la platine **58** avec les tiroirs **49** et, par coulissement oblique des rainures **55** sur leurs galets **56** respectifs, le rapprochement des tiroirs **49** dont les demi-bagues **50** de col ainsi se positionner dans les réserves **43** tronconiques pour compléter, avec les corps **39** de moules, l'empreinte de la face externe des **2** préformes (figures 5, 6, 7).

A mesure de la rotation du carrousel **4,** le galet **80** du chariot **65** passe de la portion **79B** surélevée du chemin **79** de came supérieur à sa portion **79A** basse. Le chariot **65** descend, sous son propre poids auquel s'ajoute celui du porte-noyau(x) **67,** vers sa position de moulage en glissant sur les rails **23.** Les noyaux **68** viennent se loger dans leurs corps **39** de moules respectifs pour compléter l'empreinte des préformes **2** (figures 8, 10, 11). L'arbre **81** de guidage sort de l'alésage **33** et vient se loger dans le trou **89** de l'étrier **87,** sous l'ouverture **88** (figure 21). Simultanément, sous l'action de la came **109** inférieure sur laquelle roule le galet **108,** le dispositif **103** de préhension remonte vers sa position haute, les pinces **107** demeurant ouvertes en position de libération.

Le verrou **82,** initialement en position de déverrouillage (figure 20), bascule alors en position de verrouillage lorsque le galet **84** parvient dans la portion **85B** en saillie de la came **85** interne, ce qui bloque l'arbre **81,** et donc le chariot **65,** en translation (figure 9).

C'est alors que commence l'injection. A cet effet, l'aiguille **48,** initialement en position d'obturation, est translatée vers sa position d'injection, cependant que le dispositif **14** d'injection dosimétrique est actionné pour délivrer la matière **3.** La matière **3** poussée hors du conduit **46** se répand alors, via le trou **47** ainsi libéré, dans la cavité **42,** comme illustré sur la figure 12 par le motif en nid d'abeille.

Après que l'injection de matière a débuté, le cadre **24** est déplacé vers sa position haute. A cet effet, les vérins **35** sont actionnés pour faire rentrer leurs tiges **37** respectives. La pression de la matière **3** injectée dans la cavité **41** exerce sur les noyaux **68** (et donc sur le porte-noyaux **67** et le chariot **65**) un effort ascendant. Sous l'effet de cet effort et/ou de l'action d'une portion transitoire du chemin **79** de came supérieur sur le galet **80,** le chariot **65** est déplacé vers sa position de retrait dans laquelle il se trouve bloqué par butée de l'extrémité de l'arbre **81** contre le verrou **82** maintenu en position de verrouillage (figures 13, 14, 15). Simultanément, l'actionneur **95** primaire du dispositif **90** de dévêtissement est déplacé vers sa position déployée, ce qui place en position déployée l'extracteur **91** des noyaux **68** qui sont en position d'alignement primaire. De la sorte, les tiroirs **49** sont bloqués (avec les demi-bagues **50**) en position de moulage, position qu'ils ne pourraient pas maintenir, sous la pression de la matière **3,** grâce au seul effort résistant du vérin **60** de commande.

L'injection se poursuit jusqu'au remplissage de la cavité **42,** dont on voit sur la figure 15 qu'elle présente un volume supérieur au volume final de la préforme **2.** Puis l'injection est stoppée, l'aiguille **48** étant replacée en position d'obturation.

Dans l'exemple illustré, le volume de matière injecté dans la cavité **42** est d'environ 25% supérieur au volume final de la préforme **2.** Ce surplus correspond au volume balayé par le noyau **68** entre sa position de moulage (en pointillés sur la figure 15) et sa position de retrait (en trait plein sur la figure 15).

Au contact du corps **39** de moule et du noyau **68,** dont la température est régulée à une valeur modérée (comprise entre 10°C et 20°C), la matière **3** refroidit aussitôt. Il en résulte une diminution de son volume.

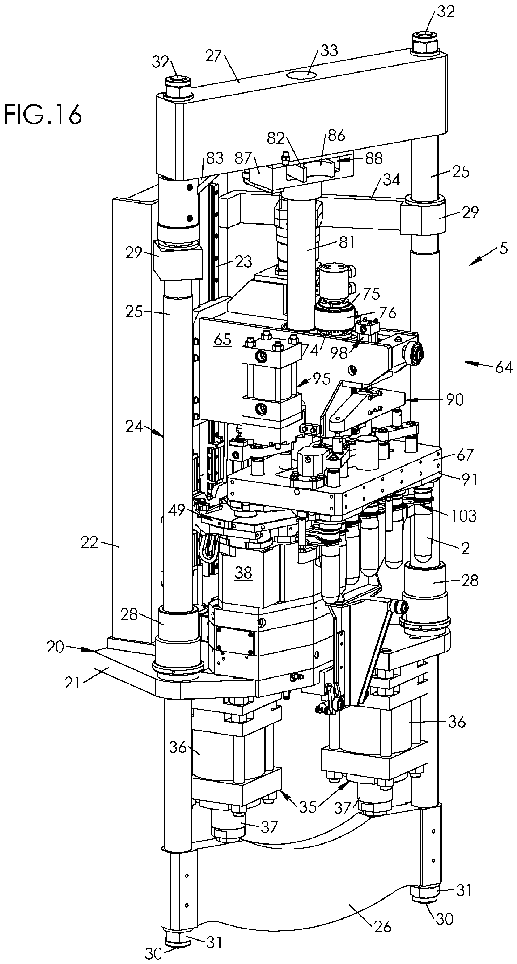

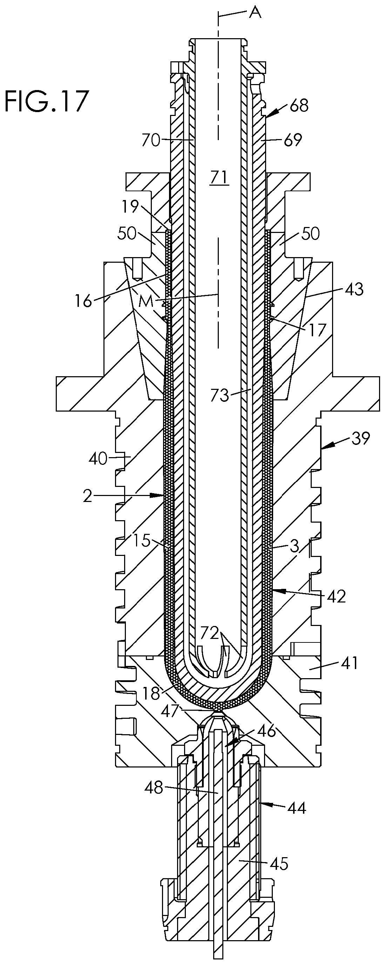

Le cadre **24** est alors replacé en position basse. A cet effet, les vérins **35** sont actionnés pour faire sortir leurs tiges **37** respectives. Le verrou **82,** maintenu en position verrouillée, appuie sur l'extrémité de l'arbre **81** de guidage, lequel, solidaire en translation du chariot **65,** entraîne celui-ci dans son mouvement descendant. Le chariot **65** retrouve (avec les noyaux **68**) sa position de moulage (figure 16). Les noyaux **68** compriment alors la matière contre le fond **41** de moule et contre la paroi **40,** dont la perte de volume due au refroidissement se trouve ainsi compensée (figure 17).

Dans le même temps, l'actionneur **98** secondaire du dispositif **90** de dévêtissement est déployé, ce qui place en position déployée l'extracteur **91** des préformes **2** qui sont en position d'alignement secondaire, cependant que le dispositif **103** de préhension se rétracte verticalement d'une distance égale (figure 18). Comme les noyaux **68** conservent leurs positions, les préformes **2** en sont décollées.

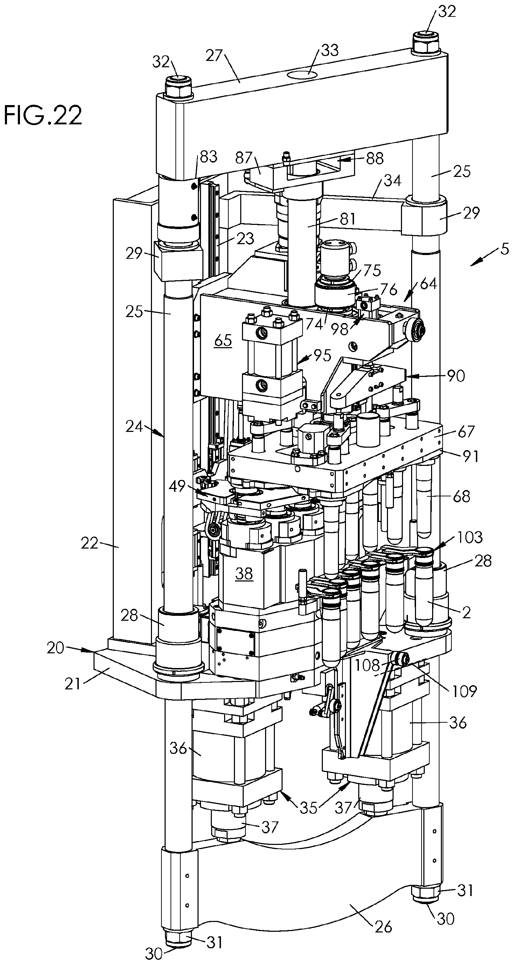

Puis les pinces **107** sont refermées en position de préhension sur les préformes **2,** cependant que l'actionneur **98** secondaire retrouve sa position rétractée (avec l'extracteur **91,** sollicité vers cette position par l'effort de rappel des ressorts **94**). Le dispositif **103** de préhension est alors translaté verticalement vers sa position basse, les noyaux **68** étant ainsi complètement dévêtus de leurs préformes **2,** qui demeurent agrippées par les pinces **107.** Dans le même temps, les tiroirs **49** sont, par l'intermédiaire de leur vérin **60** de commande, déplacés vers leur position de démoulage pour permettre l'évacuation des préformes **2** moulées, et le verrou **82** déplacé vers sa position déverrouillée pour permettre la remontée du chariot **65** (figure 22).

A mesure que se poursuit la rotation du carrousel **4,** le galet **80** remonte vers la portion **79B** surélevée du chemin **79** de came supérieur, et entraîne ainsi le chariot **65** (avec le porte-noyaux **67** et les noyaux **68** vêtus des préformes **2** tout juste démoulées) vers la position de démoulage (figure 23).

Le cycle peut alors recommencer.

Il résulte de ce qui précède les avantages suivants.

Premièrement, le fait de rétracter transitoirement le noyau **68** pendant l'injection facilite l'écoulement de la matière **3** par le point d'injection (c'est-à-dire le trou **47**). Dans les unités de moulage conventionnelles, la matière qui se refroidit au contact des surfaces froides (fond de moule et paroi, noyau) voit, à l'interface avec celles-ci, sa viscosité augmenter et freiner l'écoulement à cœur. Ce frein à l'écoulement est d'autant plus prononcé que l'interstice entre le noyau et le fond de moule est réduit (ce qui est une contrainte rendue nécessaire par l'allègement des préformes imposé par l'évolution du marché à la recherche d'économies de matière). Ici, le volume dégagé temporairement par le retrait du noyau **68** est mis à profit pour diminuer les contraintes de cisaillement s'appliquant sur la matière pour en favoriser l'écoulement rapide à cœur. Il en résulte une meilleure prise d'empreinte, une diminution des contraintes de cisaillement à l'interface entre la matière **2** d'une part et le corps **39** de moule et le noyau **68** d'autre part, et donc une diminution des risques de fissuration de la matière, ainsi qu'une diminution des contraintes résiduelles et un meilleur comportement de la matière lors du formage des récipients.

Deuxièmement, la compression de la matière **3** à la fin de l'injection compense la réduction de volume due au refroidissement, et favorise par conséquent la prise d'empreinte de la préforme **2** en diminuant le risque d'apparition de bulles. On peut donc amincir la paroi des préformes **2** (notamment au niveau du fond **18**) en maintenant (voire en améliorant) leurs performances mécaniques : bonne soufflabilité, bonne tenue mécanique lors du formage.

Troisièmement, grâce au cadre **24** mobile monobloc, mu par un (ou plusieurs, deux dans l'exemple illustré) vérin(s) **35** généreusement dimensionné(s), le porte-noyaux **67** peut être déplacé sans difficulté de sa position de retrait à sa position de moulage (lors de la compression de la matière **3**) malgré les contraintes importantes induites par la pression de la matière **3** injectée dans la cavité **42.** Le positionnement de l'arbre **81** de guidage (sur lequel s'exercent les efforts de compression transmis, via le verrou **82,** par le cadre **24** mobile) à l'aplomb du porte-moules **38** optimise les voies d'effort en minimisant les effets de couple susceptibles de générer sur l'équipage **64** mobile des efforts de flexion et/ou de cisaillement. La réalisation du socle **21** et de la console **22** en acier à haute limite élastique permet de résister aux efforts résultant de la pression de la matière **3.** Il est par conséquent possible de réduire les masses mobiles (et donc l'inertie) de l'unité **5** de moulage, au profit de sa mobilité et donc des cadences de production.

On notera, enfin, qu'il est possible de réaliser soit une injection-compression telle qu'elle vient d'être décrite (en commandant le déplacement du cadre **24**), soit une injection conventionnelle en maintenant le cadre **24** dans sa position basse tout au long de l'injection.

## Revendications

1. Unité **(5)** de moulage de préformes **(2)** en matière **(3)** plastique, chaque préforme **(2)** ayant un corps **(15)** et un col **(16)** dans le prolongement du corps **(15),** cette unité **(5)** comprenant :
- un bâti **(20)** ;
- un porte-moule **(38)** solidaire du bâti **(20)** et intégrant au moins un corps **(39)** de moule à l'empreinte d'une face externe du corps **(15)** de la préforme **(2),** ce corps **(39)** de moule s'étendant autour d'un axe **(M)** de moulage ;
- un équipage **(64)** mobile incluant un chariot **(65)** et un porte-noyau(x) **(67)** monté sur le chariot **(65),** ce porte-noyau(x) **(67)** portant au moins un noyau **(68)** oblong à l'empreinte d'une face interne de la préforme **(2),** le chariot **(65)** étant monté déplaçable en translation par rapport au bâti **(20)** entre :
∘ une position de moulage dans laquelle le noyau **(68)** est plongé dans le corps **(39)** de moule, et
∘ une position de démoulage dans laquelle le noyau **(68)** est écarté axialement du corps **(39)** de moule,
cette unité **(5)** de moulage étant **caractérisée en ce que** l'équipage **(64)** mobile comprend un arbre **(81)** de guidage solidaire du chariot **(65),** et **en ce qu'**elle comprend un cadre **(24)** incluant une paire de montants **(25)** et une paire de traverses **(26, 27)** reliant rigidement les montants **(25),** l'une des traverses **(26, 27)** étant percée d'un alésage **(33)** accueillant l'arbre **(81)** de guidage, le cadre **(24)** étant pourvu d'un verrou **(82)** mobile entre une position de verrouillage dans laquelle il s'étend au droit de l'alésage **(33)** pour bloquer l'arbre **(81)** en translation, et une position de déverrouillage dans laquelle le verrou **(82)** est écarté de l'alésage **(33)** pour libérer l'arbre **(81),** ce cadre **(24)** étant mobile en translation par rapport au bâti **(20)** entre :
- une position basse dans laquelle le verrou **(82),** en position de verrouillage, bloque le chariot **(65)** dans sa position de moulage, et
- une position haute dans laquelle le verrou **(82),** en position de verrouillage, bloque le chariot **(65)** dans une position de retrait, intermédiaire entre la position de moulage et la position de démoulage et dans laquelle le noyau **(68)** est partiellement logé dans le corps **(39)** de moule.

2. Unité **(5)** de moulage selon la revendication **1, caractérisée en ce qu'**elle comprend au moins un vérin **(35)** de commande du déplacement du cadre **(24),** interposé entre le bâti **(20)** et la traverse **(26)** inférieure.

3. Unité **(5)** de moulage selon la revendication 1 ou la revendication 2, **caractérisée en ce que** le bâti **(20)** comprend un socle **(21)** sur lequel est monté le porte-moule **(38),** et une console **(22)** qui s'étend en saillie à partir du socle **(21),** la console **(22)** portant des rails **(23)** de guidage du chariot **(65),** et **en ce que** les montants **(25)** sont montés coulissants par rapport au bâti **(20)** par l'intermédiaire d'une paire de paliers **(28)** inférieurs solidaires du socle **(21),** et d'une paire de paliers **(29)** supérieurs solidaires de la console **(22).**

4. Unité **(5)** de moulage selon la revendication 3, **caractérisée en ce que** chaque palier **(29)** supérieur est formé à l'extrémité d'une bride **(34)** fixée à la console **(22).**

5. Unité **(5)** de moulage selon l'une des revendications précédentes, **caractérisée en ce que** le verrou **(82)** est formé à une extrémité libre d'un bras **(83)** monté pivotant par rapport à l'un des montants **(25).**

6. Unité **(5)** de moulage selon l'une des revendications précédentes, **caractérisé en ce que** le porte-noyau **(67)** porte deux séries de noyaux **(68),** et est monté en rotation par rapport au chariot **(65)** pour placer alternativement chaque série de noyaux **(68)** dans l'axe (M) de moulage.

7. Unité **(5)** de moulage selon l'une des revendications précédentes, **caractérisé en ce que** l'équipage **(64)** mobile comprend un dispositif **(90)** de dévêtissement incluant un extracteur **(91)** monté en translation par rapport au porte-noyau(x) **(67),** entre une position rétractée, adoptée en position de moulage du chariot **(65),** dans laquelle l'extracteur **(91)** est appliqué contre le porte-noyau(x) **(67),** et une position déployée, adoptée en position de retrait du chariot **(65),** dans laquelle l'extracteur **(91)** est écarté du porte-noyau(x) **(67)** tout en étant maintenu appliqué contre le porte-moule **(38).**

8. Unité **(5)** de moulage selon la revendication 7, **caractérisée en ce que** l'extracteur **(91)** est monté coulissant par rapport au porte-noyau(x) **(67)** au moyen de doigts **(92)** de guidage traversant celui-ci avec interposition de ressorts **(94)** de rappel, et **en ce que** le dispositif **(90)** de dévêtissement comprend au moins un actionneur **(95, 98)** mobile entre une position rétractée, adoptée en position de moulage du chariot **(65),** dans laquelle l'actionneur **(95, 98)** permet à l'extracteur **(91)** d'adopter sa position rétractée, et une position déployée, adoptée en position de retrait du chariot **(65),** dans laquelle l'actionneur **(95, 98)** place, par appui contre les doigts **(92)** de guidage, l'extracteur **(91)** en position déployée.

9. Machine **(1)** de moulage de préformes en matière **(3)** plastique, qui comprend :
- un carrousel **(4)** tournant,
- une pluralité d'unités **(5)** de moulage selon l'une des revendications précédentes, montées sur le carrousel **(4),**
- une extrudeuse **(6),**
- un joint **(11)** tournant muni d'une entrée reliée à l'extrudeuse **(6),** et d'une pluralité de sorties **(12)** reliées chacune à une unité **(5)** de moulage par un conduit **(13)** d'alimentation pour y délivrer la matière **(3)** plastique.

10. Procédé de moulage de préformes **(2)** en matière **(3)** plastique au sein d'une unité **(5)** de moulage selon l'une des revendications 1 à 8, qui comprend les opérations consistant à :
- placer le chariot **(65)** en position de moulage, le cadre **(24)** en position basse et le verrou **(82)** en position de verrouillage ;
- initier l'injection de matière **(3)** plastique dans le ou chaque corps **(39)** de moule ;
- tout en maintenant le verrou **(82)** en position de verrouillage et en poursuivant l'injection, placer le cadre **(24)** en position haute pour placer le chariot **(65)** en position de retrait ;
- stopper l'injection ;
- replacer le cadre **(24)** en position basse pour replacer le chariot **(65)** en position de moulage ;
- placer le verrou **(82)** en position de déverrouillage ;
- placer le chariot **(65)** en position de démoulage.

## Patentansprüche

1. Einheit (5) zur Formung von Vorformlingen (2) aus Kunststoff (3), wobei jeder Vorformling (2) einen Körper (15) und einen Hals (16) in der Verlängerung des Körpers (15) aufweist, diese Einheit (5) umfassend:
- ein Gestell (20);
- einen Formträger (38), der mit dem Gestell (20) fest verbunden ist und mindestens einen Formkörper (39) mit dem Abdruck einer Außenfläche des Körpers (15) des Vorformlings (2) aufweist, wobei sich dieser Formkörper (39) um eine Formungsachse (M) erstreckt;
- eine bewegbare Ausrüstung (64), die einen Schlitten (65) aufweist, und einen Kernträger (67), der auf dem Schlitten (65) angebracht ist, wobei dieser Kernträger (67) mindestens einen länglichen Kern (68) mit dem Abdruck einer Innenfläche des Vorformlings (2) trägt, wobei der Schlitten (65) bezogen auf das Gestell (20) zwischen folgenden Positionen translatorisch bewegbar gelagert ist:
o einer Formungsposition, wobei der Kern (68) in den Formkörper (39) eingetaucht ist, und
o einer Entformungsposition, wobei der Kern (68) axial vom Formkörper (39) entfernt ist,
wobei diese Formungseinheit (5) **dadurch gekennzeichnet ist, dass** die bewegbare Ausrüstung (64) ein Führungwelle (81) umfasst, die mit dem Schlitten (65) fest verbunden ist, und dadurch, dass sie einen Rahmen (24) umfasst, der ein Paar Pfosten (25) und ein Paar Querelemente (26, 27), die die Pfosten (25) starr verbinden, aufweist, wobei eins der Querelemente (26, 27) von einer Bohrung (33) durchbohrt ist, die die Führungswelle (81) aufnimmt, wobei der Rahmen (24) mit einer Verriegelung (82) versehen ist, die zwischen einer Verriegelungsposition, wobei sie sich senkrecht zur Bohrung (33) erstreckt, um die Welle (81) translatorisch zu blockieren, und einer Entriegelungsposition, wobei die Verriegelung (82) von der Bohrung (33) entfernt ist, um die Welle (81) freizugeben, bewegbar ist, wobei dieser Rahmen (24) bezogen auf das Gestell (20) zwischen folgenden Positionen translatorisch bewegbar ist:
- einer unteren Position, wobei die Verriegelung (82) in der Verriegelungsposition den Schlitten (65) in seiner Formungsposition blockiert, und
- einer oberen Position, wobei die Verriegelung (82) in der Verriegelungsposition den Schlitten (65) in einer Rückzugsposition zwischen der Formungsposition und der Entformungsposition blockiert, und wobei der Kern (68) teilweise im Formkörper (39) aufgenommen ist.

2. Formungseinheit (5) nach Anspruch 1, **dadurch gekennzeichnet, dass** sie mindestens einen Zylinder (35) zur Steuerung der Bewegung des Rahmens (24) umfasst, der zwischen dem Gestell (20) und dem unteren Querelement (26) eingefügt ist.

3. Formungseinheit (5) nach Anspruch 1 oder 2, **dadurch gekennzeichnet, dass** das Gestell (20) einen Sockel (21) umfasst, auf dem der Formträger (38) angebracht ist, und eine Konsole (22), die sich vom Sockel (21) abstehend erstreckt, wobei die Konsole (22) Schienen (23) zur Führung des Schlittens (65) trägt, und dadurch, dass die Pfosten (25) mittels eines Paares von unteren Lagern (28), die mit dem Sockel (21) fest verbunden sind, und eines Paares von oberen Lagern (29), die mit der Konsole (22) fest verbunden sind, bezogen auf das Gestell (20) gleitend gelagert sind.

4. Formungseinheit (5) nach Anspruch 3, **dadurch gekennzeichnet, dass** jedes obere Lager (29) am Ende eines Flansches (34) ausgebildet ist, der an der Konsole (22) befestigt ist.

5. Formungseinheit (5) nach einem der vorhergehenden Ansprüche, **dadurch gekennzeichnet, dass** die Verriegelung (82) an einem freien Ende eines Arms (83) ausgebildet ist, der bezogen auf einen der Pfosten (25) schwenkbar gelagert ist.

6. Formungseinheit (5) nach einem der vorhergehenden Ansprüche, **dadurch gekennzeichnet, dass** der Kernträger (67) zwei Reihen von Kernen (68) trägt und bezogen auf den Schlitten (65) drehbar gelagert ist, um abwechselnd jede Reihe von Kernen (68) in die Formungsachse (M) zu bringen.

7. Formungseinheit (5) nach einem der vorhergehenden Ansprüche, **dadurch gekennzeichnet, dass** die bewegbare Ausrüstung (64) eine Abnahmevorrichtung (90) umfasst, die einen Extraktor (91) aufweist, der bezogen auf den Kernträger (67) zwischen einer eingefahrenen Position, die in der Formungsposition des Schlittens (65) eingenommen wird, wobei der Extraktor (91) an den Kernträger (67) angelegt ist, und einer ausgefahrenen Position, die in der Rückzugsposition des Schlittens (65) eingenommen wird, wobei der Extraktor (91) von dem Kernträger (67) entfernt ist, wobei er in Anlage an den Formträger (38) gehalten wird, translatorisch bewegbar gelagert ist.

8. Formungseinheit (5) nach Anspruch 7, **dadurch gekennzeichnet, dass** der Extraktor (91) bezogen auf den Kernträger (67) mittels Führungsfingern (92) gleitend gelagert ist, die diesen unter Zwischenschaltung von Rückholfedern (94) durchqueren, und dadurch, dass die Abnahmevorrichtung (90) mindestens einen Aktor (95, 98) umfasst, der zwischen einer eingefahrenen Position, die in der Formungsposition des Schlittens (65) eingenommen wird, wobei es der Aktor (95, 98) dem Extraktor (91) gestattet, seine eingefahrene Position einzunehmen, und einer ausgefahrenen Position, die in der Rückzugsposition des Schlittens (65) eingenommen wird, wobei der Aktor (95, 98) durch Anlage an den Führungsfingern (92) den Extraktor (91) in die ausgefahrene Position bringt.

9. Maschine (1) zur Formung von Vorformlingen aus Kunststoff (3), die Folgendes umfasst:
- ein Drehkarussell (4),
- eine Mehrzahl von Formungseinheiten (5) nach einem der vorhergehenden Ansprüche, die auf dem Karussell (4) angebracht sind,
- einen Extruder (6),
- eine Drehverbindung (11), die mit einem Eingang, der mit dem Extruder (6) verbunden ist, und einer Mehrzahl von Ausgängen (12), die jeweils durch eine Zufuhrleitung (13) mit einer Formungseinheit (5) verbunden sind, um dieser den Kunststoff (3) zuzuführen, versehen ist.

10. Verfahren zur Formung von Vorformlingen (2) aus Kunststoff (3) innerhalb einer Formungseinheit (5) nach einem der Ansprüche 1 bis 8, das die folgenden Arbeitsgänge umfasst, die darin bestehen:
- den Schlitten (65) in Formungsposition, den Rahmen (24) in die untere Position und die Verriegelung (82) in die Verriegelungsposition zu bringen;
- das Einspritzen von Kunststoff (3) in den oder jeden Formkörper (39) einzuleiten;
- bei Halten der Verriegelung (82) in der Verriegelungsposition und Fortführung des Einspritzens den Rahmen (24) in die obere Position zu bringen, um den Schlitten (65) in die Rückzugsposition zu bringen;
- das Einspritzen zu stoppen;
- den Rahmen (24) wieder in die untere Position zu bringen, um den Schlitten (65) wieder in die Formungsposition zu bringen;
- die Verriegelung (82) in die Entriegelungsposition zu bringen;
- den Schlitten (65) in die Entformungsposition zu bringen.

## Claims

1. Unit (5) for moulding preforms (2) made of plastic material (3), each preform (2) having a body (15) and a neck (16) in continuation of the body (15), this unit (5) comprising:
- a structure (20);
- a mould carrier (38) that is secured to the structure (20) and integrates at least one mould body (39) having the imprint of an outer face of the body (15) of the preform (2), this mould body (39) extending about a moulding axis (M);
- a movable assembly (64) including a carriage (65) and a core carrier (67) mounted on the carriage (65), this core carrier (67) carrying at least one oblong core (68) having the imprint of an inner face of the preform (2), the carriage (65) being mounted such that it can be moved in translation with respect to the structure (20) between:
o a moulding position in which the core (68) is inserted into the mould body (39), and
o a demoulding position in which the core (68) is moved axially away from the mould body (39),
this moulding unit (5) being **characterized in that** the movable assembly (64) comprises a guiding shaft (81) that is secured to the carriage (65), and **in that** it comprises a frame (24) that includes a pair of uprights (25) and a pair of crossmembers (26, 27) which rigidly connect the uprights (25), one of the crossmembers (26, 27) having pierced in it a bore (33) that accommodates the guiding shaft (81), the frame (24) being provided with a lock (82) that can be moved between a locking position in which it extends in line with the bore (33) to immobilize the shaft (81) in translation, and an unlocking position in which the lock (82) is moved away from the bore (33) so as to free the shaft (81), this frame (24) being movable in translation with respect to the frame (20) between:
- a lower position in which the lock (82), in the locking position, immobilizes the carriage (65) in its moulding position, and
- an upper position in which the lock (82), in the locking position, immobilizes the carriage (65) in a retracted position which is intermediate between the moulding position and the demoulding position and in which the core (68) is partially accommodated in the mould body (39).

2. Moulding unit (5) according to Claim 1, **characterized in that** it comprises at least one ram (35) for controlling the movement of the frame (24), this being interposed between the structure (20) and the lower crossmember (26).

3. Moulding unit (5) according to Claim 1 or Claim 2, **characterized in that** the structure (20) comprises a pedestal (21) on which the mould carrier (38) is mounted, and a console (22) which extends projecting from the pedestal (21), the console (22) bearing rails (23) for guiding the carriage (65), and **in that** the uprights (25) are mounted so as to be able to slide with respect to the structure (20) by means of a pair of lower bearings (28) that are secured to the pedestal (21), and by means of a pair of upper bearings (29) that are secured to the console (22).

4. Moulding unit (5) according to Claim 3, **characterized in that** each upper bearing (29) is formed at the end of a flange (34) attached to the console (22).

5. Moulding unit (5) according to one of the preceding claims, **characterized in that** the lock (82) is formed at a free end of an arm (83) that is mounted so as to be able to pivot with respect to one of the uprights (25).

6. Moulding unit (5) according to one of the preceding claims, **characterized in that** the core carrier (67) bears two sets of cores (68) and is mounted so as to be able to rotate with respect to the carriage (65) in order to position, in alternation, each set of cores (68) in the moulding axis (M).

7. Moulding unit (5) according to one of the preceding claims, **characterized in that** the mobile assembly (64) comprises a stripping device (90) including an extractor (91) that is mounted in translation with respect to the core carrier (67), between a withdrawn position which is adopted when the carriage (65) is in the moulding position and in which the extractor (91) is pressed against the core carrier (67), and a deployed position which is adopted when the carriage (65) is in the retracted position and in which the extractor (91) is moved away from the core carrier (67) while being held pressed against the mould carrier (38).

8. Moulding unit (5) according to Claim 7, **characterized in that** the extractor (91) is mounted so as to be able to slide with respect to the core carrier (67) by means of guiding fingers (92) that pass through it with interposition of return springs (94), and **in that** the stripping device (90) comprises at least one actuator (95, 98) that is able to move between a withdrawn position which is adopted when the carriage (65) is in the moulding position and in which the actuator (95, 98) allows the extractor (91) to adopt its withdrawn position, and a deployed position which is adopted when the carriage (65) is in its retracted position and in which the actuator (95, 98) places the extractor (91) in the deployed position by pressing against the guiding fingers (92).

9. Machine (1) for moulding preforms made of plastic material (3), which comprises:
- a rotating carousel (4),
- a plurality of moulding units (5) according to one of the preceding claims, these being mounted on the carousel (4),
- an extruder (6),
- a rotating joint (11) provided with an inlet that is connected to the extruder (6) and a plurality of outlets (12) that are each connected to a moulding unit (5) by a feed duct (13) for delivering the plastic material (3) thereto.

10. Method for moulding preforms (2) made of plastic material (3) within a moulding unit (5) according to one of Claims 1 to 8, which comprises the operations of:
- placing the carriage (65) in a moulding position, the frame (24) in the lower position and the lock (82) in the unlocking position;
- initiating the injection of plastic material (3) into the or each mould body (39);
- while keeping the lock (82) in the locking position and while continuing the injection, placing the frame (24) in the upper position so as to place the carriage (65) in the retracted position;
- stopping the injection;
- returning the frame (24) to the lower position so as to return the carriage (65) to the moulding position;
- placing the lock (82) in the unlocking position;
- placing the carriage (65) in the demoulding position.
